(19) Europäisches Patentamt / European Patent Office / Office européen des brevets

(11) **EP 3 896 387 B1**

(12) **EUROPEAN PATENT SPECIFICATION**

(45) Date of publication and mention
of the grant of the patent:
**17.01.2024  Bulletin 2024/03**

(21) Application number: **19896307.6**

(22) Date of filing: **20.11.2019**

(51) International Patent Classification (IPC):
*G06T 7/80* *(2017.01)*      *G06T 7/593* *(2017.01)*

(52) Cooperative Patent Classification (CPC):
**G06T 7/85; G01C 3/14; G01C 25/00; G06T 7/593;**
G06T 2207/30261

(86) International application number:
**PCT/JP2019/045355**

(87) International publication number:
**WO 2020/121757 (18.06.2020 Gazette 2020/25)**

(54) **IMAGE PROCESSING DEVICE**

**BILDVERARBEITUNGSVORRICHTUNG**

**DISPOSITIF DE TRAITEMENT D'IMAGE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **14.12.2018   JP 2018234931**

(43) Date of publication of application:
**20.10.2021   Bulletin 2021/42**

(73) Proprietor: **Hitachi Astemo, Ltd.**
**Hitachinaka-shi, Ibaraki 312-8503 (JP)**

(72) Inventors:
• **AOKI Toshiyuki**
 **Tokyo 100-8280 (JP)**
• **OSATO Takuma**
 **Tokyo 100-8280 (JP)**
• **NAGASAKI Takeshi**
 **Hitachinaka-shi,**
 **Ibaraki 312-8503 (JP)**
• **OOTSUKA Yuuji**
 **Hitachinaka-shi, Ibaraki 312-8503 (JP)**
• **TADA Naoya**
 **Hitachinaka-shi,**
 **Ibaraki 312-8503 (JP)**

(74) Representative: **MERH-IP Matias Erny Reichl
Hoffmann
Patentanwälte PartG mbB
Paul-Heyse-Strasse 29
80336 München (DE)**

(56) References cited:
EP-A1- 3 410 705      WO-A1-2015/198930
JP-A- 2012 075 060    JP-A- 2018 105 682
JP-A- 2018 105 682    US-A1- 2017 201 736

**Description**

Technical Field

The present invention relates to an image processing device.

Background Art

Conventionally, a technology for correcting a deviation in camera parameters between two cameras constituting a stereo camera with respect to a stereo image captured by the stereo camera. PTL 1 discloses a calibration shift correction device including a calibration data holding unit that holds calibration data related to an imaging device that captures a stereo image, a feature extracting unit that extracts features from the stereo image captured by the imaging device, and a calibration data correction unit that corrects calibration shift related to the calibration data held in the calibration data holding unit on the basis of information representing the features extracted by the feature extracting unit.

EP 3 410 705 discloses a stereo calibration method for compensating vertical shift between cameras where horizontal searches provide a best match for a given vertical shift. Several vertical shifts are tested, which provides a plurality of candidate matches (one per vertical shift). The best match provides the vertical shift.

US 2017/201736 discloses a vertical shift compensation method based on optical flow over the whole image.

JP 2018 105682 discloses a vertical shift compensation method.

Citation List

Patent Literature

PTL 1: JP 2004-354257 A

Summary of Invention

Technical Problem

In the related art of PTL 1, it is necessary to perform processing of detecting a feature having edges in two or more different directions on one of two images constituting a stereo image and processing of detecting a point corresponding to the feature on the other image, and the load of these processing is heavy. Generally, in a stereo camera used while being mounted on a vehicle, a calculation device whose calculation performance is not so high is used. Therefore, the above-described processing is dividedly performed over a plurality of frames. In this case, when there is a shift in the stereo image in a direction perpendicular to a traveling direction of the vehicle, the deviation in camera parameters cannot be properly corrected. As a result, there is a possibility that a region in which a solid object does not actually exist is erroneously determined as a solid object, which results in erroneous detection of a solid object.

Solution to Problem

An image processing device according to the present invention includes: image input units which input a first image and a second image captured by a pair of imaging units constituting a stereo camera at each predetermined frame rate, respectively; a geometric correction unit which performs geometric correction of the first image and the second image by using preset geometric correction information; a parallax calculating unit which calculates a parallax image based on the first image and the second image that are geometrically corrected by the geometric correction unit; a solid object estimating unit which performs solid object estimation for estimating whether or not an object included in the first image and the second image is a solid object on a basis of the parallax image calculated by the parallax calculating unit; a vertical shift detecting unit which uses the first image and the second image of the same frame as that for which the solid object estimation has been performed to detect a vertical shift between a first region including the object in the first image and a second region including the object in the second image in a case where the object is estimated as a solid object by the solid object estimating unit; and a solid object determining unit which calculates parallax of the object on a basis of the vertical shift between the first region and the second region detected by the vertical shift detecting unit, and determines whether or not the object is a solid object.

Advantageous Effects of Invention

According to the present invention, even when there is a vertical shift in a stereo image, a solid object can be accurately detected from the stereo image.

Brief Description of Drawings

[FIG. 1] FIG. 1 is a diagram illustrating a configuration of a stereo camera system according to an embodiment of the present invention.

[FIG. 2] FIG. 2 is a diagram illustrating an operation procedure of a calculating unit in the stereo camera system according to an embodiment of the present invention.

[FIG. 3] FIG. 3 is a diagram illustrating an operation procedure of processing of detecting a vertical shift between object regions according to an embodiment of the present invention.

[FIG. 4] FIG. 4 is a diagram illustrating an operation procedure of solid object determination processing according to an embodiment of the present invention.

[FIG. 5] FIG. 5 is a diagram illustrating an operation procedure of geometric calibration processing.

[FIG. 6] FIG. 6 is a diagram illustrating the operation procedure of the geometric calibration processing.

[FIG. 7] FIG. 7 is a diagram illustrating an example of a template image and a searched image set as a criterion image and a reference image, respectively.

[FIG. 8] FIG. 8 is a diagram illustrating an example of a search position and the degree of pattern matching.

[FIG. 9] FIG. 9 is a diagram illustrating an example of an object region set for a zebra zone region of each of the criterion image and the reference image.

[FIG. 10] FIG. 10 is a diagram illustrating an example of a distance image created from a parallax image.

[FIG. 11] FIG. 11 is a diagram illustrating an example of an object region set in each of a criterion image and a reference image.

[FIG. 12] FIG. 12 is a diagram illustrating an example of a feature point region and a corresponding point region set in the object region of the criterion image and the object region of the reference image, respectively.

[FIG. 13] FIG. 13 is a diagram illustrating an operation procedure of processing of detecting a vertical shift between object regions according to a modified example of the present invention.

[FIG. 14] FIG. 14 is a diagram illustrating an operation procedure of solid object determination processing according to a modified example of the present invention.

Description of Embodiments

(First Embodiment)

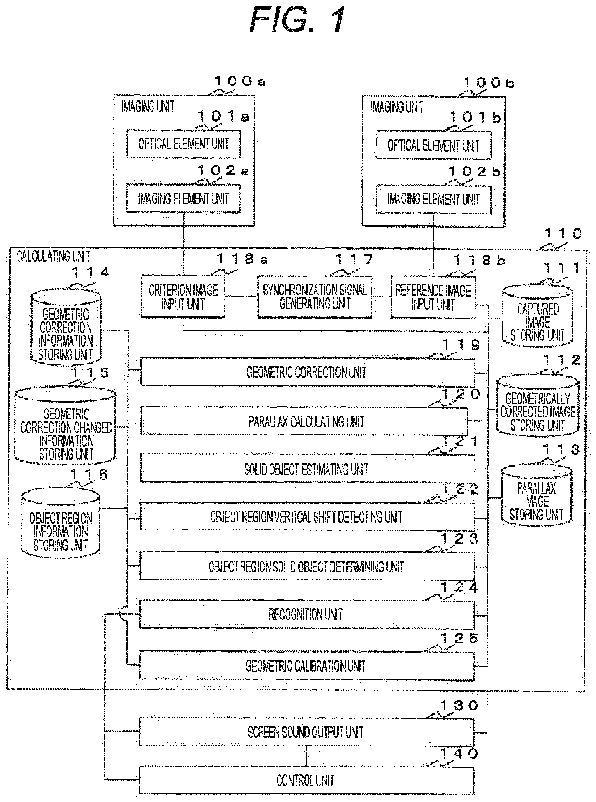

FIG. 1 is a diagram illustrating a configuration of a stereo camera system according to an embodiment of the present invention. The stereo camera system of the present embodiment is used while being mounted on, for example, a vehicle, and includes a pair of imaging units 100a and 100b constituting a stereo camera, and a calculating unit 110, a screen sound output unit 130, and a control unit 140 that constitute an image processing device.

The imaging units 100a and 100b are installed on the left and right sides at a predetermined interval so as to face a predetermined direction around the vehicle, for example, to face an area in front of the vehicle. The imaging unit 100a includes an optical element unit 101a and an imaging element unit 102a, and the imaging unit 100b includes an optical element unit 101b and an imaging element unit 102b. The optical element units 101a and 101b are constituted by a lens or the like having a predetermined focal length, and refract light incident on the imaging units 100a and 100b to form an image on each of the imaging element units 102a and 102b. The imaging element units 102a and 102b receive the images formed by the optical element units 101a and 101b, and each generate a captured image according to the intensity of the light at each predetermined frame rate, thereby performing imaging. Note that an optical axis direction and focal length of the optical element unit 101a in the imaging unit 100a and an optical axis direction and focal length of the optical element unit 101b in the imaging unit 100b are set to be the same as each other.

The image captured by the imaging unit 100a is an image that serves as a criterion when a parallax image to be described later is created in the calculating unit 110. Therefore, hereinafter, the image captured by the imaging unit 100a will be referred to as a "criterion image". Meanwhile, the image captured by the imaging unit 100b is an image that is referenced in order to search for a region that matches a region extracted from the criterion image when creating the parallax image. Therefore, hereinafter, the image captured by the imaging unit 100b will be referred to as a "reference image".

The calculating unit 110 is an image processing device that performs predetermined image processing by using the criterion image and the reference image, and is implemented by a central processing unit (CPU), a memory, or the like. The calculating unit 110 includes, as functions thereof, a captured image storing unit 111, a geometrically corrected image storing unit 112, a parallax image storing unit 113, a geometric correction information storing unit 114, a geometric correction changed information storing unit 115, an object region information storing unit 116, a synchronization signal generating unit 117, a criterion image input unit 118a, a reference image input unit 118b, a geometric correction unit 119, a parallax calculating unit 120, a solid object estimating unit 121, an object region vertical shift detecting unit 122, an object region solid object determining unit 123, a recognition unit 124, and a geometric calibration unit 125.

In the calculating unit 110, the captured image storing unit 111, the geometrically corrected image storing unit 112, the parallax image storing unit 113, the geometric correction information storing unit 114, the geometric correction changed information storing unit 115, and the object region information storing unit 116 are each implemented by a memory or the like. Further, the synchronization signal generating unit 117, the criterion image input unit 118a, the reference image input unit 118b, the geometric correction unit 119, the parallax calculating unit 120, the solid object estimating unit 121, the object region vertical shift detecting unit 122, and the object region solid object determining unit 123, the recognition unit 124, and the geometric calibration unit 125 are each implemented by a CPU executing a predetermined program stored in a memory. Note that some or all of these functions may be implemented by hardware such as a field programmable gate array (FPGA).

The captured image storing unit 111 stores the criterion image and the reference image output from the imaging units 100a and 100b, respectively.

The geometrically corrected image storing unit 112 stores geometrically corrected images obtained by geometrically correcting the criterion image and the reference image, respectively. Note that the geometric correction of the criterion image and the reference image is performed by the geometric correction unit 119.

The parallax image storing unit 113 stores a parallax image generated on the basis of the geometrically corrected criterion image and the geometrically corrected reference image. Note that the generation of the parallax image is performed by the parallax calculating unit 120.

The geometric correction information storing unit 114 stores geometric correction information used when the geometric correction unit 119 performs the geometric correction on the criterion image and the reference image. The geometric correction information is information for correcting the distortion and position shift of the criterion image and the reference image caused by lens distortion or optical axis deviation of the optical element units 101a and 101b in the imaging units 100a and 100b, and is preset according to optical characteristics and the like of the optical element units 101a and 101b.

The geometric correction changed information storing unit 115 stores geometric correction changed information used when the geometric correction unit 119 performs the geometric correction on the criterion image and the reference image. The geometric correction changed information is information for correcting the mechanical displacement in an imaging direction of the imaging units 100a and 100b caused by aging, thermal change, shock vibration, and the like, and is calculated by the object region vertical shift detecting unit 122 and the geometric calibration unit 125. In addition, various information to be described later, which are acquired and used in geometric calibration processing performed by the geometric calibration unit 125, are also stored in the geometric correction changed information storing unit 115.

The object region information storing unit 116 stores various information used in processing performed by each of the solid object estimating unit 121, the object region vertical shift detecting unit 122, and the object region solid object determining unit 123. The details of the information stored in the object region information storing unit 116 will be described later.

The synchronization signal generating unit 117 generates a synchronization signal synchronized with a frame rate at which the imaging units 100a and 100b each perform imaging. The synchronization signal generated by the synchronization signal generating unit 117 is output to the criterion image input unit 118a and the reference image input unit 118b.

The criterion image input unit 118a transmits imaging information such as an exposure time to the imaging unit 100a in response to the synchronization signal input from the synchronization signal generating unit 117. Then, the criterion image captured by the imaging unit 100a is input and stored in the captured image storing unit 111.

The reference image input unit 118b transmits imaging information such as an exposure time to the imaging unit 100b in response to the synchronization signal input from the synchronization signal generating unit 117. Then, the reference image captured by the imaging unit 100b is input and stored in the captured image storing unit 111.

The geometric correction unit 119 reads the geometric correction information from the geometric correction information storing unit 114 and reads the geometric correction changed information from the geometric correction changed information storing unit 115. Then, the criterion image and the reference image stored in the captured image storing unit 111 are geometrically corrected on the basis of the read information, and the geometrically corrected criterion image and the geometrically corrected reference image are stored in the geometrically corrected image storing unit 112. Note that the details of the geometric correction performed by the geometric correction unit 119 will be described later.

The parallax calculating unit 120 reads the geometrically corrected criterion image and the geometrically corrected reference image from the geometrically corrected image storing unit 112, and calculates a parallax image representing parallax for each region between the criterion image and the reference image on the basis of these images.

Then, the calculated parallax image is stored in the parallax image storing unit 113. Note that the details of a method of calculating, by the parallax calculating unit 120, the parallax image will be described later.

The solid object estimating unit 121 reads the parallax image from the parallax image storing unit 113, and estimates whether or not an object included in the criterion image and the reference image is a solid object on the basis of the parallax image. As a result, in a case where there is an object estimated as a solid object, the three-dimensional position of the object and the range of an object region in the criterion image are stored in the object region information storing unit 116. Note that the details of a method of estimating, by the solid object estimating unit 121, a solid object will be described later.

In a case where there is an object estimated as a solid object by the solid object estimating unit 121, the object region vertical shift detecting unit 122 uses a criterion image and a reference image of the same frame to set object regions corresponding to the object in the reference image and the object region, respectively, and detects a vertical shift between the set object regions. Then, the amount of vertical movement of the reference image is calculated from the value of the detected vertical shift between the object regions, and is stored in the geometric correction changed information storing unit 115. Note that the details of a method of detecting, by the object region vertical shift detecting unit 122, a vertical shift will be described later.

In a case where there is an object estimated as a solid object by the solid object estimating unit 121, the object region solid object determining unit 123 calculates parallax of the object on the basis of a vertical shift between object regions detected by the object region vertical shift detecting unit 122. Then, whether or not the object is actually a solid object is determined on the basis of the calculated parallax. Note that the details of a method of determining, by the object region solid object determining unit 123, a solid object will be described later.

The recognition unit 124 calculates the relative position and relative velocity of an object estimated as a solid object by the solid object estimating unit 121 or an object determined as a solid object by the object region solid object determining unit 123 as a recognition target, with respect to the vehicle. Further, a collision time taken for the solid object to collide with the vehicle is calculated, and a collision between the solid object and the vehicle is determined on the basis of the collision time. Then, the calculated relative position, relative velocity, and collision time, and a collision determination result are output to the screen sound output unit 130 and the control unit 140.

The geometric calibration unit 125 reads the geometrically corrected criterion image and the geometrically corrected reference image from the geometrically corrected image storing unit 112, reads the parallax image from the parallax image storing unit 113, and performs the geometric calibration processing for calculating the geometric correction changed information on the basis of these images. In the geometric calibration processing, geometrically corrected criterion images and reference images of a plurality of frames are used, and the amount of horizontal movement and the amount of vertical movement for correcting the mechanical displacement in the imaging direction of the imaging units 100a and 100b caused by aging, thermal change, shock vibration, and the like, are calculated for each of the criterion image and the reference image. Then, the amounts of horizontal movement and the amounts of vertical movement of the criterion image and the reference image that are calculated are stored as the geometric correction changed information in the geometric correction changed information storing unit 115. Note that the details of the geometric calibration processing performed by the geometric calibration unit 125 will be described later.

The screen sound output unit 130 is implemented by a monitor such as a liquid crystal display or a speaker, and presents information output from the recognition unit 124 to the occupant of the vehicle. For example, the geometrically corrected criterion image and reference image, a parallax image, and the like are displayed on a screen of a monitor, and a frame or a marker indicating the position of a solid object recognized from the image is displayed to present the presence of the solid object to the occupant. At this time, the shape of the displayed frame or marker may be changed according to a result of the collision determination performed by the recognition unit 124 to alert the occupant. Further, in a case where there is a solid object determined by the recognition unit 124 as being likely to collide with the vehicle, a predetermined warning sound may be output to alert the occupant.

The control unit 140 generates a control signal for controlling the behavior of the vehicle on the basis of the information output from the recognition unit 124, and outputs the control signal to the outside of the stereo camera system. The control signal output from the control unit 140 is transmitted to, for example, an electronic control unit (ECU) in the vehicle, and is used for a vehicle control performed by the ECU.

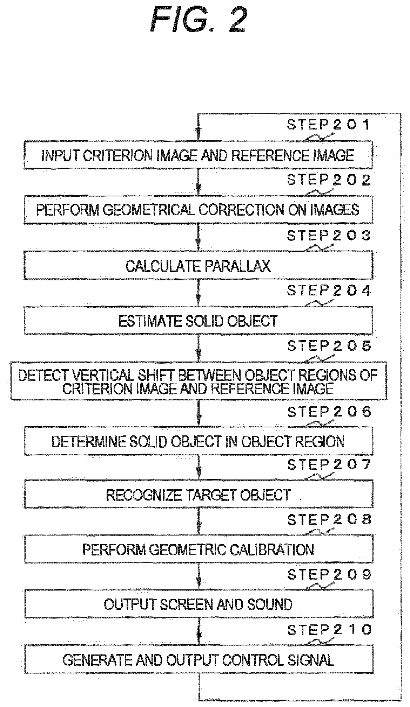

Next, an operation procedure of the stereo camera system will be described below with reference to FIGS. 2 to 6. FIG. 2 is a diagram illustrating an operation procedure of the calculating unit 110 in the stereo camera system according to an embodiment of the present invention. The calculating unit 110 repeatedly performs processing according to the operation procedure in FIG. 2 in a predetermined processing cycle, for example, at each frame rate corresponding to the output cycle of the criterion image and the reference image from the imaging units 100a and 100b.

(Step 201: Input Criterion Image and Reference Image)

In Step 201, the criterion image input unit 118a and the reference image input unit 118b input the criterion image and the reference image captured by the imaging units 100a and 100b, respectively. At this time, the synchronization signal generating unit 117 generates a synchronization signal and transmits the synchronization signal to the criterion image input unit 118a and the reference image input unit 118b.

Once the synchronization signal is received from the synchronization signal generating unit 117, the criterion image input unit 118a transmits the synchronization signal and information on the exposure time to the imaging element unit 102a. Once the synchronization signal and the information on the exposure time are received from the criterion image input unit 118a, the imaging element unit 102a performs imaging by receiving an image formed by the optical element unit 101a for the specified exposure time, generates a captured image corresponding to the intensity of light, and transmits the captured image to the criterion image input unit 118a. Once the captured image is received from the imaging element unit 102a, the criterion image input unit 118a stores the captured image as the criterion image in the captured image storing unit 111.

Once the synchronization signal is received from the synchronization signal generating unit 117, the reference image input unit 118b transmits the synchronization signal and information on the exposure time to the imaging element unit 102b. Once the synchronization signal and the information on the exposure time are received from the reference image input unit 118b, the imaging element unit 102b performs imaging by receiving an image formed by the optical element unit 101b for the specified exposure time, generates a captured image corresponding to the intensity of light, and transmits the captured image to the reference image input unit 118b. Once the captured image is received from the imaging element unit 102b, the reference image input unit 118b stores the captured image as the reference image in the captured image storing unit 111.

(Step 202: Geometric Correction)

In Step 202, the geometric correction unit 119 performs geometric correction of the criterion image and the reference image acquired in Step 201. At this time, the geometric correction unit 119 reads the criterion image and the reference image from the captured image storing unit 111. Further, the geometric correction information for the criterion image and the reference image is read from the geometric correction information storing unit 114, and the geometric correction changed information indicating the amounts of horizontal movement and the amounts of vertical movement of the criterion image and the reference image is read from the geometric correction changed information storing unit 115. Then, the criterion image and the reference image are geometrically corrected on the basis of the read information. For example, the geometric correction unit 119 calculates the position (X2,Y2) of each pixel of the geometrically corrected criterion image corresponding to the position (X1,Y1) of each pixel of the criterion image by using the following Equations (1) and (2), and performs two-dimensional linear interpolation by using brightness values of the respective pixels of the criterion image and pixels positioned therearound to calculate the brightness value of each pixel of the geometrically corrected criterion image. As a result, the geometric correction of the criterion image is performed. Note that, in Equations (1) and (2), Fx and Fy represent the distortion of the criterion image that is caused by the lens distortion or optical axis deviation of the optical element unit 101a, and information on Fx and Fy are included in the geometric correction information. Further, ΔX2 and ΔY2 represent the amount of horizontal movement and the amount of vertical movement of the criterion image, respectively, and information on ΔX2 and ΔY2 are included in the geometric correction changed information.

$$X1 = Fx(X2,Y2) + \Delta X2 \quad (1)$$

$$Y1 = Fy(X2, Y2) + \Delta Y2 \quad (2)$$

Further, the geometric correction unit 119 also performs the geometric correction of the reference image by the same procedure as described above, and calculates the brightness value of each pixel of the geometrically corrected reference image. After performing each of the geometric correction of the criterion image and the geometric correction of the reference image, the geometric correction unit 119 stores the geometrically corrected criterion image and the geometrically corrected reference image in the geometrically corrected image storing unit 112.

(Step 203: Parallax Calculation)

In Step 203, the parallax calculating unit 120 calculates the parallax image on the basis of the criterion image and the reference image that are geometrically corrected in Step 202. At this time, the parallax calculating unit 120 reads the geometrically corrected criterion image and the geometrically corrected reference image from the geometrically corrected image storing unit 112. Then, a region having a predetermined size is extracted as a template image from the geometrically corrected criterion image, and template matching using the template image is performed on the geometrically corrected reference image, thereby generating the parallax image.

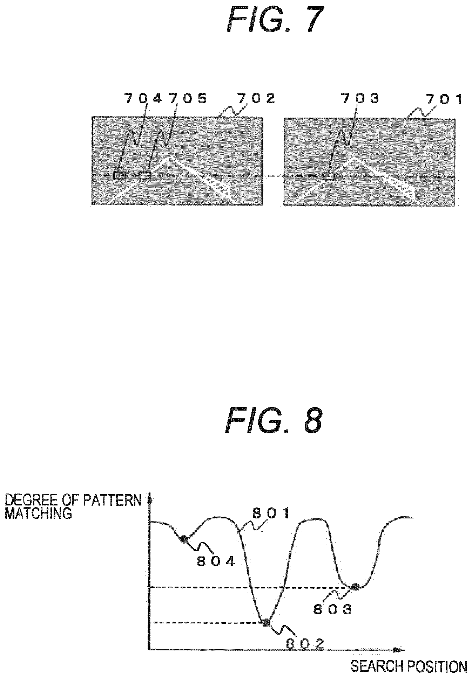

The generation of the parallax image in Step 203 will be described below with reference to an example of the criterion image and the reference image illustrated in FIG. 7. As illustrated in FIG. 7, the parallax calculating unit 120 first extracts, as the template image, an image 703 of a region having a predetermined size from a geometrically corrected criterion image 701. Next, in a geometrically corrected reference image 702, an image 705 of a region in which the same target object as that of the template image 703 is present is searched for as a corresponding image corresponding to the template image 703. Here, for example, the corresponding image 705 corresponding to the template image 703 is searched for in the reference image 702 by the template matching as described below.

In the template matching, in the geometrically corrected reference image 702, an image 704 of a region having a predetermined size at an arbitrary horizontal position on the same level as the template image 703 is extracted as a searched image. Then, the absolute value of a difference in brightness value between the template image 703 and the searched image 704 is calculated for each pixel, and the sum of the absolute values calculated for each pixel in the entire image is calculated to calculate the sum of absolute difference (SAD) of the searched image 704 with respect to the template image 703. Such calculation of the SAD is performed for the geometrically corrected reference image 702 while changing the horizontal position of the searched image 704 on the same level as the template image 703 to specify the searched image 704 with the minimum SAD. As a result, it is possible to specify the searched image 704 with the minimum SAD, and the image is set as the corresponding image 705 corresponding to the template image 703. Accordingly, the corresponding image 705 can be searched for.

After searching for the corresponding image 705 corresponding to the template image 703 in the geometrically corrected reference image 702 as described above, the horizontal position of the corresponding image 705 is further calculated in a unit of subpixel. For example, the horizontal position of the corresponding image 705 can be calculated in a unit of subpixel by performing equiangular linear fitting using the SAD of the corresponding image 705 and the SAD of the searched image 704 adjacent to each of the left and right sides of the corresponding image 705. Then, parallax between the template image 703 in the geometrically corrected criterion image 701 and the corresponding image 705 in the geometrically corrected reference image 702 is calculated by adding the calculated horizontal position in a unit of subpixel to the difference in position between the template image 703 and the corresponding image 705 calculated above.

Next, whether the calculated parallax is valid or invalid is determined. Here, for example, it is possible to determine whether the parallax is valid or invalid by using the following two determination methods.

In the first determination method, whether or not the SAD calculated for the corresponding image 705 is equal to or larger than a predetermined threshold value. In a case where the SAD of the corresponding image 705 is equal to or larger than the threshold value, it is determined that the template image 703 and the corresponding image 705 do not match, and the parallax of a region corresponding to the template image 703 is invalid. On the other hand, in a case where the SAD of the corresponding image 705 is smaller than the threshold value, it is determined that the parallax is valid.

In the second determination method, whether the parallax is valid or invalid is determined on the basis of a change in SAD calculated for each searched image 704. Hereinafter, this determination method will be described by using a specific example of a search position and the degree of pattern matching illustrated in FIG. 8.

For example, it is assumed that the SAD of each searched image 704 that represents the degree of pattern matching with the template image 703 is changed according to the position in the geometrically corrected reference image 702, as indicated by a curve 801 in FIG. 8. In this case, the difference in SAD between the searched images 704 adjacent to each other is calculated, points 802 to 804 at which the difference is changed from negative to positive are detected, and among the points 802 to 804, the point 802 with the smallest SAD and the point 803 with the second smallest SAD are specified. Then, whether or not the differences in SAD at these points 802 and 803 are smaller than a predetermined threshold value. In a case where the differences in SAD are smaller than the threshold value, it is determined that there is a pattern similar to the template image 703 in addition to the corresponding image 705 in the geometrically corrected reference image 702, and there is a possibility of mismatching. Then, it is determined that the parallax of the region corresponding to the template image 703 is invalid. On the other hand, in a case where the differences in SAD are equal to or larger than the threshold value, it is determined that the parallax is valid. Note that in a case where there is only one point at which the difference in SAD between adjacent searched images 704 is changed from negative to positive, it is also determined that the parallax is valid.

After calculating the parallax by the template matching, whether the parallax of the region corresponding to the template image 703 is valid or invalid is determined by using the two determination methods described above. In a case where it is determined in both of the two determination methods that the parallax is valid, the parallax of the region is valid, and in a case where it is determined in at least one of the determination methods that the parallax is invalid, the parallax of the region is invalid. Note that whether the parallax is valid or invalid may be determined by using only one of the determination methods.

In Step 203, the parallax calculating unit 120 performs the above-described processing for all the regions on the geometrically corrected criterion image 701, and calculates the parallax of the entire criterion image 701. Then, the calculated parallax is set for each region on the criterion image 701 to generate the parallax image. After generating the parallax image based on the geometrically corrected criterion image and the geometrically corrected reference image as described above, the parallax calculating unit 120 stores the generated parallax image in the parallax image storing unit 113.

(Step 204: Estimation of Solid Object)

In Step 204, the solid object estimating unit 121 estimates whether or not the object included in the criterion image and the reference image is a solid object on the basis of the parallax image calculated in Step 203. At this time, the solid object estimating unit 121 reads the parallax image from the parallax image storing unit 113. Then, a distance from the vehicle (a distance from the stereo camera) in the optical axis direction is calculated for each region of the read parallax image. For example, the solid object estimating unit 121 calculates a distance L from the vehicle in the optical axis direction by using the following Equation (3). Note that, in Equation (3), f represents the design value of the focal length of the optical element units 101a and 101b of the imaging units 100a and 100b, and B represents a distance (base length) between the principal points of the imaging unit 100a and the imaging unit 100b. Further, d represents the parallax in the parallax image, and c represents the pixel pitch of the imaging element units 102a and 102b.

$$L = f \times B/(d \times c) \quad (3)$$

The solid object estimating unit 121 performs processing of calculating the distance L using Equation (3) described above for the entire parallax image to calculate the distance from the vehicle for each region of the parallax image. Then, a distance image is created by reflecting the calculated distance information in the parallax image.

After creating the distance image, the solid object estimating unit 121 calculates the three-dimensional position of each region on the distance image by using the following Equations (4) to (6). Here, a three-dimensional coordinate system representing the three-dimensional position is set so that, for example, a point on a road surface vertically below the principal point of the optical element unit 101a of the imaging unit 100a is the origin, the right direction represents the X axis, the upward direction represents the Y axis, and the traveling direction represents the Z axis. Further, in the following Equations (4) to (6), U and V represent the horizontal position and the vertical position of each region on the distance image, and U0 and V0 represent the optical axis positions on the criterion image. Further, H represents the mounting height of the imaging unit 100a from the road surface.

$$X = L \times c \times (U - U0)/f \quad (4)$$

$$Y = H + L \times c \times (V - V0)/f \quad (5)$$

$$Z = L \quad (6)$$

In Step 204, the solid object estimating unit 121 performs the above-described processing for all the regions of the distance image, and calculates the three-dimensional position of each region in the entire distance image. Then, in a case where a region in which the difference in distance is within 1% is detected, the area of the region is equal to or larger than a threshold value, and the height (Y coordinate) from the road surface is equal to or larger than a threshold value, it is estimated that an object corresponding to the region is a solid object. After estimating that the object is a solid object as described above, the solid object estimating unit 121 calculates the average of the three-dimensional positions of the object region determined as a solid object to determine the average as the three-dimensional position of the object region, and calculates the center position of the range of the object region on the criterion image to determine the center position as the position of the object region on the criterion image, and the three-dimensional position of the region including the object and the position and range of the object region on the criterion image are stored in the object region information storing unit 116.

Here, it is assumed that, in the stereo camera of the present embodiment, white lines (an edge line, a lane line, a centerline, and the like) on both sides of a lane on the road surface are continuously imaged from the start to the current time in a state where a vertical shift between the criterion image and the reference image occurs due to the mechanical displacement in the imaging direction of the imaging units 100a and 100b caused by aging, thermal change, shock vibration, and the like. In this case, since the criterion image does not have a feature point having edges in two or more directions, the feature point cannot be detected from the criterion image, and as a result, the vertical shift between the criterion image and the reference image cannot be corrected. At this time, for example, when a zebra zone, in which a plurality of lines each extending in a direction different from that of the white lines, for example, a direction that is oblique to the traveling direction of the vehicle at 45°, appears on the road as illustrated in FIG. 7 described above, an error occurs in the parallax, and as a result, the zebra zone region may be erroneously estimated as a solid object.

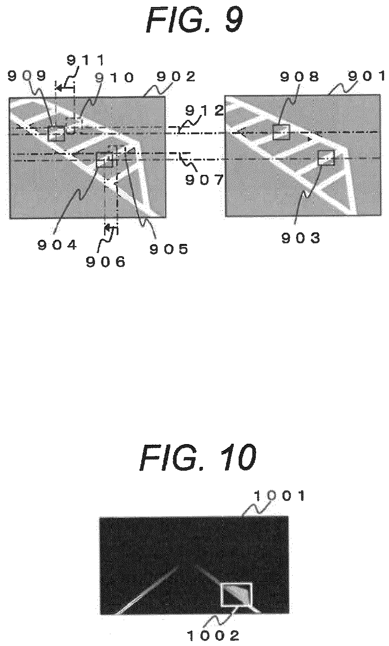

The above-described misestimation of the solid object will be described below with reference to a specific example of the object regions in the criterion image and the reference image illustrated in FIG. 9. In the example of FIG. 9, object regions 901 and 902 are set in the zebra zone regions of the criterion image and the reference image, respectively, and there is a vertical shift 907 between the object regions 901 and 902. In this state, when the template matching is performed using an image 903 having a predetermined size in the object region 901 on the criterion image as the template image, in the object region 902 on the reference image, instead of an image 905 of a correct region, an image 904 of an incorrect region is searched for as a corresponding image corresponding to the template image 903. As a result, parallax calculated for the template image 903 is increased by a value corresponding to a distance on the image, indicated by Reference Sign 906. Similarly, when the template matching is performed using an image 908 having a predetermined size in the object region 901 on the criterion image as the template image, in the object region 902 on the reference image, instead of an image 910 of a correct region, an image 909 of an incorrect region is searched for as a corresponding image corresponding to the template image 908. As a result, parallax calculated for the template image 908 is increased by a value corresponding to a distance on the image, indicated by Reference Sign 911.

Here, the template image 908 is positioned on a level higher than that of the template image 903 in the object region 901 on the criterion image, that is, is positioned away in the real space. On the other hand, the distance 911 on the image representing a parallax error calculated for the template image 908 is larger than the distance 906 on the image representing a parallax error calculated for the template image 903. As described above, in a case where there is the vertical shift 907 between the object region 901 on the criterion image and the object region 902 on the reference image, when the template matching is performed for the zebra zone on the road surface, the more distant the region is positioned from the vehicle, the larger the parallax error is, and as a result, a value larger than the actual parallax is calculated.

In the distance image calculated using the parallax image as described above, a distance smaller than the actual distance is calculated for a zebra zone in which distances on the upper side and the lower side on the image are different from each other, and a difference in distance becomes small. Accordingly, the distance distribution is as if a solid object exists in the zebra zone region, and as a result, the zebra zone region is erroneously estimated as a solid object.

FIG. 10 illustrates an example of a distance image created from a parallax image calculated on the basis of the criterion image 701 and the reference image 702 illustrated in FIG. 7 in a case where a parallax error occurs due to the vertical shift as described in FIG. 9. In a distance image 1001 of FIG. 10, a distance from the vehicle is represented by the brightness (shading) of the image. The closer to white, the shorter the distance is, and the closer to black, the longer the distance is. Note that a portion other than a white line is displayed in black, which indicates an invalid region where parallax could not be detected. In this distance image 1001, it can be seen that the upper portion and the lower portion of a zebra zone region 1002 are positioned almost the same distance away, and the distance distribution is as if there is a solid object.

(Step 205: Detection of Vertical Shift Between Object Regions)

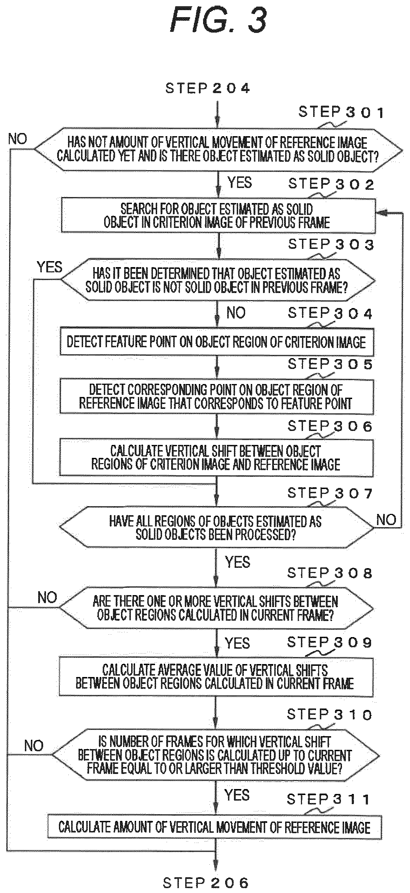

In Step 205, the object region vertical shift detecting unit 122 detects the vertical shift between the object regions in the criterion image and the reference image. At this time, the object region vertical shift detecting unit 122 sets, as the object regions, regions corresponding to the object estimated as a solid object in Step 204 in the criterion image and the reference image, respectively, and detects the vertical shift between the object regions. Note that in a case where there are a plurality of objects estimated as solid objects, the vertical shift between the object regions is detected for each object, and the average value thereof is calculated. Then, when the number of frames (still frames) of the image in which the vertical shift between the object regions is detected reaches a predetermined number or more, the amount of vertical movement of the object region in the reference image is calculated by calculating the average value of the vertical shifts between the object regions in these frames. Once the amount of vertical movement of the reference image is calculated as described above, the object region vertical shift detecting unit 122 stores the calculated amount of vertical movement as the geometric correction changed information in the geometric correction changed information storing unit 115. Note that the details of the processing of Step 205 will be described later with reference to FIG. 3.

(Step 206: Determination of Solid Object)

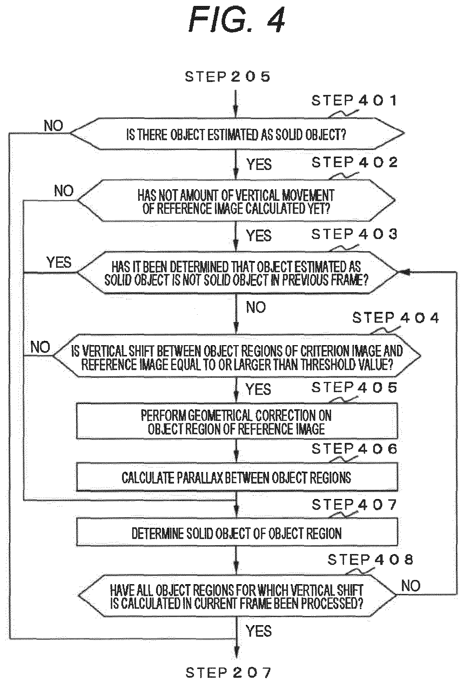

In Step 206, the object region solid object determining unit 123 determines whether or not the object estimated as a solid object in Step 204 is actually a solid object. Here, after geometrically correcting the object region of the reference image on the basis of the vertical shift between the object regions detected in Step 205, the parallax between the object region in the criterion image and the object region in the reference image is calculated. Then, whether or not the object is a solid object is determined by calculating the three-dimensional position of the object region by using the same method as in Step 204 on the basis of the calculated parallax. After determining that the object is a solid object as described above, the object region solid object determining unit 123 stores, in the object region information storing unit 116, the three-dimensional position of the object region and the position of the object region on the criterion image. Note that the details of the processing of Step 206 will be described later with reference to FIG. 4.

(Step 207: Recognition of Target Object)

In Step 207, the recognition unit 124 recognizes, as a target object, the object determined as a solid object in Step 206, and determines the collision with the vehicle. At this time, the recognition unit 124 reads, from the object region information storing unit 116, the three-dimensional position of the object region in the past frame calculated in Step 206 in the previous processing, and the three-dimensional position of the object region in the current frame calculated in Step 206 in the current processing. Then, the three-dimensional position (Pxa, Pya, Pza) of the solid object in the past frame and the three-dimensional position (Pxb, Pyb, Pzb) of the solid object in the current frame are calculated by calculating the average value of the three-dimensional positions in each object region. After calculating the three-dimensional position of the solid object for each of the past and current frames as described above, the recognition unit 124 divides a difference therebetween by the frame rate, that is, the processing cycle of the flowchart of FIG. 2 to calculate the relative velocity (Vx, Vy, and Vz) of the solid object with respect to the road surface directly under the vehicle on which the stereo camera of the present embodiment is installed.

The recognition unit 124 determines the collision between the solid object, which is the target object, and the vehicle, on the basis of the relative velocity of the solid object calculated as described above. For example, in a case where the relative velocity Vz of the solid object in a Z-axis direction is 0 or more, that is, in a case where the velocity of the solid object with respect to the traveling direction of the vehicle is larger than that of the vehicle, it is determined that the vehicle does not collide with the solid object. On the other hand, in a case where the relative velocity Vz of the solid object is negative, a time (collision time) taken until the vehicle collides with the solid object is calculated by dividing the relative position Pxb of the solid object in an X-axis direction calculated for the current frame in the current processing by the absolute value of the relative velocity Vz. Then, the relative velocity Vx of the solid object in the X-axis direction is multiplied by the calculated collision time, and the relative position Pxo of the solid object in the X-axis direction at the time of collision is calculated by adding a value obtained by the multiplication to the relative position Pxb. In a case where the collision time does not exceed a predetermined threshold value, and the absolute value of the relative position Pxo of the solid object at the time of collision does not exceed a predetermined threshold value, it is determined that the vehicle collides with the solid object, and in other cases, it is determined that the vehicle does not collide with the solid object.

After performing the collision determination as described above, the recognition unit 124 transmits a target object recognition result to the screen sound output unit 130 and the control unit 140. For example, information on the size and position of the object region including the solid object on the criterion image (coordinate values of the four corners of the object region in the criterion image, and the like), and information such as the three-dimensional position and relative velocity of the solid object calculated in the current processing, the collision determination result, or the collision time are output as the target object recognition result to each of the screen sound output unit 130 and the control unit 140.

(Step 208: Geometric Calibration)

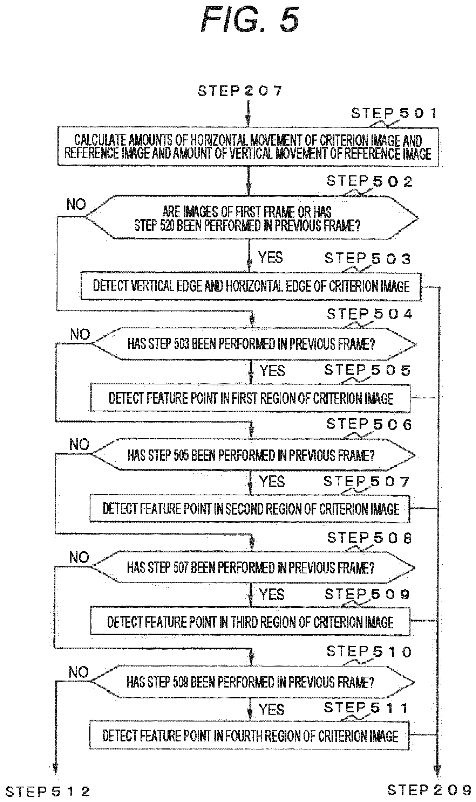

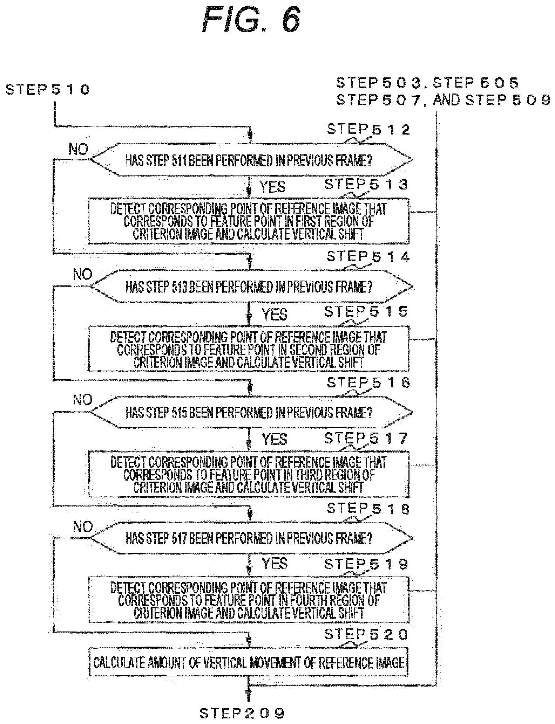

In Step 208, the geometric calibration unit 125 performs geometric calibration on the criterion image and the reference image. At this time, the geometric calibration unit 125 reads the geometrically corrected criterion image and the geometrically corrected reference image from the geometrically corrected image storing unit 112, and reads the parallax image from the parallax image storing unit 113. Then, the white lines on the left and right sides of the lane on the road surface are searched for in each of the geometrically corrected criterion image and the geometrically corrected reference image, and the position of an intersection therebetween is calculated, thereby calculating the positions of vanishing points in the criterion image and the reference image, respectively. Then, the amounts of horizontal movement of the criterion image and the reference image and the amount of vertical movement of the criterion image are calculated so that the calculated positions of the vanishing points match the design values of the optical axis positions of the optical element units 101a and 101b of the imaging units 100a and 100b, respectively. Further, a feature point having two or more different edges on the criterion image is searched for over a plurality of frames, and corresponding points on the reference image that correspond to the feature points are detected. Then, the vertical shift between the criterion image and the reference image is detected on the basis of the positional relationship between the detected feature point and the corresponding point, and the value thereof is set as the amount of vertical movement of the reference image. After the amounts of horizontal movement and the amounts of vertical movement of the criterion image and the reference image are calculated as described above, the geometric calibration unit 125 stores the values thereof as the geometric correction changed information in the geometric correction changed information storing unit 115. Note that the details of the processing of Step 208 will be described later with reference to FIGS. 5 and 6.

(Step 209: Output of Screen and Sound)

In Step 209, the screen sound output unit 130 outputs a screen and sound for notifying the driver of the vehicle of the presence of a solid object. At this time, the screen sound output unit 130 receives the target object recognition result output from the recognition unit 124 in Step 207, and reads the geometrically corrected criterion image from the geometrically corrected image storing unit 112. Then, the criterion image is displayed on a monitor installed at a predetermined position in the vehicle, and the range of the object region including the solid object is displayed in a form of a frame or the like on the criterion image. At this time, it is preferable to change the display form (the color, the line width, or the like) of the frame according to the content of the collision determination result. Further, in a case of a collision determination result indicating a collision with the solid object, a warning sound may be output to alert the driver.

(Step 210: Generation and Output of Control Signal)

In Step 210, the control unit 140 generates and outputs a control signal for the vehicle. At this time, the control unit 140 receives the target object recognition result output from the recognition unit 124 in Step 207, and generates a control signal according to the content thereof. For example, in a case of a collision determination result indicating a collision with the solid object, a control signal for controlling the operation of the brake or steering is generated and output in order to avoid the collision.

Next, the details of the respective pieces of processing of Steps 205, 206, and 208 will be described with reference to FIGS. 3 to 6, respectively.

(Details of Step 205)

First, an operation procedure of processing of detecting, by the object region vertical shift detecting unit 122, the vertical shift between the object regions in Step 205 will be described below with reference to FIG. 3.

In Step 301, the object region vertical shift detecting unit 122 determines whether or not the amount of vertical movement of the reference image has not been calculated and whether or not there is an object estimated as a solid object by the solid object estimating unit 121 in Step 204. In a case where all of these conditions are satisfied, the processing proceeds to Step 302, and in a case where at least one of the conditions is not satisfied, the processing of Step 205 is terminated, and the processing proceeds to Step 206. Note that the amount of vertical movement of the reference image is calculated by the object region vertical shift detecting unit 122 in Step 311 to be described later in the processing of detecting the vertical shift between the object regions in Step 205, or is calculated by the geometric calibration unit 125 in Step 520 to be described later in geometric calibration processing of Step 208.

In Step 302, the object region vertical shift detecting unit 122 searches for the position of the object region on the criterion image in the previous frame, the object region corresponding to the object estimated as a solid object in Step 204. Here, the object region vertical shift detecting unit 122 reads, from the geometrically corrected image storing unit 112, the geometrically corrected criterion image in the previous frame stored in Step 202, and the geometrically corrected criterion image in the current frame stored in Step 202 in the current processing. Further, the position and range of the object region on the criterion image corresponding to the object estimated as a solid object in the current frame, and stored in Step 204 in the current processing are read from the object region information storing unit 116. The position of the object region on the criterion image corresponding to the object estimated as a solid object in the previous frame, and stored in Step 407 in the previous processing is read from the object region information storing unit 116. In a case where the position of the object region on the criterion image corresponding to the object determined as a solid object in the previous frame is not within a predetermined range from the position of the object region on the criterion image estimated as a solid object in the current frame, it is determined that the object region estimated in the current frame has been determined as not a solid object in the previous frame. In a case where the position of the object region on the criterion image corresponding to the object determined as a solid object in the past frame is within the predetermined range from the position of the object region on the criterion image estimated as a solid object in the current frame, the SAD of the object region on the criterion image of the current frame and the predetermined range from the position of the object region calculated in the current frame on the criterion image of the previous frame is calculated. In a case where the minimum value thereof is equal to or larger than a predetermined threshold value, it is determined that the object region estimated in the current frame has been determined as not a solid object in the previous frame. In other cases, that is, in a case where the object region estimated as a solid object in the previous frame is within the predetermined range from the position of the object region calculated in the current frame, and the minimum value of the SAD of the object region of the current frame and the predetermined range from the position of the object region calculated in the current frame on the criterion image of the previous frame is smaller than the predetermined threshold value, it is determined that the object region estimated in the current frame has been determined as a solid object in the previous frame.

In Step 303, the object region vertical shift detecting unit 122 performs the following step on the basis of the result of the determination of whether or not it has been determined in the previous processing that the object estimated as a solid object is not a solid object in Step 302. In a case where it has been determined in the previous processing that the object estimated as a solid object in Step 204 is not a solid object, the processing proceeds to Step 307. In a case where it has been determined in the previous processing that the object estimated as a solid object in Step 204 is a solid object, the processing proceeds to Step 304. Here, Step 302 and Step 303 may be integrated with each other.

In Step 304, the object region vertical shift detecting unit 122 detects the feature point in the object region of the criterion image. Here, the object region vertical shift detecting unit 122 calculates a difference between the brightness value of each pixel in the object region and the brightness value of a pixel on the right side of each pixel in the geometrically corrected criterion image, and determines whether or not the absolute value of the difference is equal to or larger than a predetermined threshold value. In a case where the absolute value is equal to or larger than the threshold value, it is determined that there is a vertical edge in the object region, and the value of the vertical edge is set to "1". In a case where the absolute value is not equal to or larger than the threshold value, the value of the vertical edge is set to "0", and the vertical edge is calculated for each pixel in the object region of the criterion image. Further, a difference between the brightness value of each pixel in the object region and the brightness value of a pixel on the upper side of each pixel in the geometrically corrected criterion image is calculated, and whether or not the absolute value of the difference is equal to or larger than a predetermined threshold value is determined. In a case where the absolute value is equal to or larger than the threshold value, it is determined that there is a horizontal edge in the object region, and the value of the horizontal edge is set to "1". In a case where the absolute value is not equal to or larger than the threshold value, the value of the horizontal edge is set to "0", and the horizontal edge is calculated for each pixel in the object region of the criterion image. After setting the values of the vertical edge and the horizontal edge of each pixel as described above, these values are checked to detect, as the feature point, a pixel in which both the vertical edge and the horizontal edge exist.

In Step 305, the object region vertical shift detecting unit 122 detects a point corresponding to the feature point detected from the criterion image in Step 304 in the object region of the reference image. Here, the object region vertical shift detecting unit 122 reads, from the geometrically corrected image storing unit 112, the geometrically corrected reference image in the current frame stored in Step 202 in the current processing, and reads the parallax image from the parallax image storing unit 113. Then, the corresponding point corresponding to the feature point is detected in the object region of the reference image by, for example, the following method, on the basis of these read images and the feature point detected in the object region of the criterion image in Step 304.

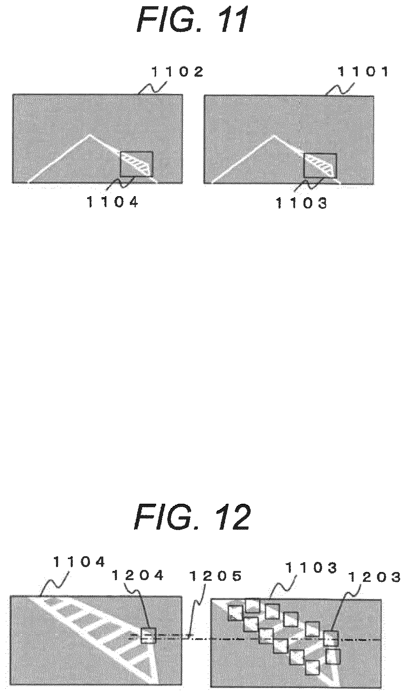

The detection of the corresponding point in Step 305 will be described below by using examples of FIGS. 11 and 12. Here, as illustrated in FIG. 11, it is assumed that an object region 1103 in a geometrically corrected criterion image 1101 corresponds to an object region 1104 in a geometrically corrected reference image 1102. Further, it is assumed that a plurality of feature points have been detected in the object region 1103 of the criterion image in Step 304. In this case, the object region vertical shift detecting unit 122 sets a plurality of feature point regions including the feature points in the object region 1103 of the criterion image, as indicated by a plurality of frame lines in FIG. 12, and a predetermined range including the position obtained by moving a feature point region 1203 by the parallax on the object region 1104 of the reference image is set as an SAD calculation target range. Then, the SAD in the calculation target range for the feature point region 1203 is calculated on the basis of the brightness values of the feature point region 1203 and the set calculation target range, and the position where the SAD is the smallest is detected as the position of the corresponding point. After detecting the position of the corresponding point as described above, the object region vertical shift detecting unit 122 sets a corresponding point region 1204 including the corresponding point on the object region 1104 of the geometrically corrected reference image. Note that, as illustrated in FIG. 12, there is a vertical position error 1205 according to the vertical shift between the criterion image and the reference image between the feature point region 1203 and the corresponding point region 1204.

In Step 305, it is possible to detect the corresponding point for each feature point and set the corresponding point region corresponding to the feature point region on the reference image by performing the above-described processing for each feature point region.

In Step 306, the object region vertical shift detecting unit 122 calculates the vertical shift between the object region of the criterion image and the object region of the reference image. For example, in a case of the example of FIG. 12, the object region vertical shift detecting unit 122 calculates the vertical position error 1205 between the feature point region 1203 on the object region 1103 of the criterion image and the corresponding point region 1204 of the reference image detected in Step 305, and the value of the vertical position error 1205 is used as the vertical shift between the object region 1103 of the criterion image and the object region 1104 of the reference image. At this time, the SAD for the feature point region 1203 may be calculated for each region shifted by one pixel in the vertical direction of the corresponding point region 1204, and the position of the corresponding point region 1204 may be calculated in a unit of subpixel by performing equiangular linear fitting using the SAD, thereby calculating the value of the vertical shift between the object regions in a unit of subpixel.

In Step 307, the object region vertical shift detecting unit 122 calculates the vertical shift between the object regions in Step 306 for all the objects estimated as solid objects in Step 204, or determines whether or not an affirmative determination is already made in Step 303. In a case where these conditions are not satisfied for at least one of the objects, the processing returns to Step 302, and the pieces of processing of Steps 302 to 306 are continued. On the other hand, in a case where the vertical shift between the object regions is already calculated for all the objects, or it is already determined in the previous processing that the object is not a solid object, the processing proceeds to Step 308.

In Step 308, the object region vertical shift detecting unit 122 determines whether or not Step 306 has been performed at least once in the current processing, and whether or not one or more vertical shifts between the object regions have been calculated for the current frame. In a case where one or more vertical shifts between the object regions have been calculated, the processing proceeds to Step 309, and in a case where no vertical shift has been calculated, the processing of Step 205 is terminated, and the processing proceeds to Step 206.

In Step 309, the object region vertical shift detecting unit 122 calculates the average value of the vertical shifts between the object regions in the current frame calculated in Step 306 of the current processing, and stores the average value in the object region information storing unit 116.

In Step 310, the object region vertical shift detecting unit 122 determines whether or not the number of times the vertical shift between the object regions is calculated up to the current frame is equal to or larger than a predetermined threshold value. At this time, the object region vertical shift detecting unit 122 can check, for example, the number of average values of the vertical shifts between the object regions calculated for a frame previous to the current frame stored in the object region information storing unit 116, and compare the number of stored average values with a predetermined threshold value to perform the determination in Step 310. In a case where the number of times the vertical shift between the object regions is calculated up to the current frame is equal to or larger than the threshold value, the processing proceeds to Step 311. In a case where the number of times the vertical shift between the object regions is calculated up to the current frame is not equal to or larger than the threshold value, the processing of Step 205 is terminated, and the processing proceeds to Step 206.

In Step 311, the object region vertical shift detecting unit 122 calculates the amount of vertical movement of the reference image on the basis of the vertical shift between the object regions calculated up to the current frame. Specifically, the average values of the vertical shifts between the object regions calculated for, for example, a plurality of frames from the past to the current time, respectively, in Step 309, and stored in the object region information storing unit 116 are acquired from the object region information storing unit 116. Further, the amount of vertical movement of the reference image is read from the geometric correction changed information storing unit 115. Then, the average value of these acquired average values is further calculated, and the average value of the vertical shifts between the object regions is added to the read amount of vertical movement of the reference image to calculate the amount of vertical movement of the reference image for correcting the vertical shift between the criterion image and the reference image. After calculating the amount of vertical movement of the reference image on the basis of the vertical shift between the object regions in a plurality of frames from the past to the current time as described above, the object region vertical shift detecting unit 122 stores the value as the geometric correction changed information in the geometric correction changed information storing unit 115. After performing Step 311, the processing of Step 205 is terminated, and the processing proceeds to Step 206.

(Details of Step 206)

Next, an operation procedure of solid object determination processing performed by the object region solid object determining unit 123 in Step 206 will be described below with reference to FIG. 4.

In Step 401, the object region solid object determining unit 123 determines whether or not there is an object estimated as a solid object by the solid object estimating unit 121 in Step 204. In a case where there is at least one object estimated as a solid object, the processing proceeds to Step 402, and in a case where there is no object estimated as a solid object, the processing of Step 206 is terminated, and the processing proceeds to Step 207.

In Step 402, the object region solid object determining unit 123 determines whether or not the amount of vertical movement of the reference image has not been calculated. Note that the amount of vertical movement of the reference image is calculated by the object region vertical shift detecting unit 122 in Step 311 of FIG. 3 as described above, or is calculated by the geometric calibration unit 125 in Step 520 to be described later in the geometric calibration processing of Step 208. In a case where the amount of vertical movement of the reference image has not been calculated, the processing proceeds to Step 403, and in a case where the amount of vertical movement of the reference image is already calculated, the processing proceeds to Step 407.

In Step 403, the object region solid object determining unit 123 selects one of the objects estimated as solid objects in Step 204, and determines whether or not it has been determined in the previous processing that the object is not a solid object. Here, for example, the SAD of the object region on the criterion image in the current frame and the predetermined range on the criterion image in the previous frame is calculated by the same method as in Steps 302 and 303 of FIG. 3, and whether or not the previous processing result indicates that the object is a solid object is determined on the basis of whether or not the minimum value of the calculated SAD is smaller than the predetermined threshold value. In a case where it has been determined in the previous processing that the object is not a solid object, the processing proceeds to Step 407, and in a case where it has been determined that the object is a solid object, the processing proceeds to Step 404. Note that the processing result of Step 303 may be used, and the processing of Step 403 may be omitted.

In Step 404, the object region solid object determining unit 123 determines whether or not the vertical shift between the object regions of the criterion image and the reference image calculated for the object by the object region vertical shift detecting unit 122 in Step 306 is equal to or larger than a predetermined threshold value. In a case where the vertical shift between the object regions is equal to or larger than the threshold value, the processing proceeds to Step 405, and in a case where the vertical shift between the object regions is smaller than the threshold value, the processing proceeds to Step 407.

In Step 405, the object region solid object determining unit 123 further performs geometrical correction on the object region corresponding to the object in the geometrically corrected reference image. At this time, the object region solid object determining unit 123 can perform geometric correction of the object region by the same method as in Step 202, for example. That is, the position $(X2,Y2)$ of each pixel in the object region in the further geometrically corrected reference image, which corresponds to the position $(X1,Y1)$ of each pixel in the object region in the reference image for which the geometric correction is already performed in Step 202, is calculated by using Equations (1) and (2) described above. At this time, the value of the vertical shift calculated in Step 306 is used for $\Delta Y2$ in Equation (2). In addition, the brightness value of each pixel of the object region in the further geometrically corrected reference image can be calculated by performing two-dimensional linear interpolation using the brightness values of the respective pixels in the reference image and pixels positioned therearound. As a result, the geometric correction is further performed on the object region in the geometrically corrected reference image.

In Step 406, the object region solid object determining unit 123 calculates the parallax between the object region in the geometrically corrected criterion image and the object region in the reference image on which the geometric correction is further performed in Step 405. At this time, the object region solid object determining unit 123 can calculate the parallax between the object regions by the same method as in Step 203, for example.

In Step 407, the object region solid object determining unit 123 determines the solid object in the object region. At this time, the object region solid object determining unit 123 determines whether or not the object estimated as a solid object in Step 204 is actually a solid object on the basis of the determination results of Steps 402, 403, and 404 and the parallax calculated in Step 406. Specifically, for example, in a case where it is determined in Step 402 that the amount of vertical movement of the reference image is already calculated, it is determined that all the objects estimated as solid objects are solid objects. In a case where it is determined in Step 403 that the previous processing result indicates that the object is a solid object, it is determined that the object is a solid object. On the other hand, in a case where it is determined in Step 403 that the previous processing result indicates that the object is not a solid object, it is determined that the object is not a solid object. In a case where it is determined in Step 404 that the vertical shift between the object regions is smaller than the threshold value, it is determined that the object is a solid object as indicated by the estimation result in Step 204, and it is determined that there is a solid object in the object region corresponding to the object. Further, in a case where the parallax is calculated in Step 406, whether or not the object is a solid object is determined by performing the same processing as in Step 204 on the basis of the value of the parallax. In a case where it is determined that the object is a solid object, the three-dimensional position of the object region corresponding to the object and the position of the object region on the criterion image are stored in the object region information storing unit 116.

In Step 408, the object region solid object determining unit 123 determines whether or not the determination of the solid object is already performed in Step 407 for all the objects estimated as solid objects in Step 204. In a case where the determination of the solid object has not been performed for at least one of the objects, the processing returns to Step 403, and the pieces of processing of Steps 403 to 407 are continued. On the other hand, in a case where the determination of the solid object is already performed for all the objects, the processing of Step 206 is terminated, and the processing proceeds to Step 207.

(Details of Step 208)

Next, the operation procedure of the geometric calibration processing performed by the geometric calibration unit 125 in Step 208 will be described below with reference to FIGS. 5 and 6. Note that FIGS. 5 and 6 illustrate an example of an operation procedure in a case where the calculation of the amount of vertical movement of the reference image for correcting the vertical shift between the criterion image and the reference image is divided into 10 pieces of processing. That is, the geometric calibration processing illustrated in FIGS. 5 and 6 is performed over 10 frames of the captured image acquired by each of the imaging units 100a and 100b.

In Step 501, the geometric calibration unit 125 calculates the amounts of horizontal movement of the criterion image and the reference image and the amount of vertical movement of the reference image. Here, the geometric calibration unit 125 reads, from the geometrically corrected image storing unit 112, the geometrically corrected criterion image and the geometrically corrected reference image in the current frame stored in Step 202 in the current processing, and reads the parallax image from the parallax image storing unit 113. Then, the amounts of horizontal movement of the criterion image and the reference image and the amount of vertical movement of the reference image are calculated by using the method as described above. That is, for the criterion image, the white lines on the left and right sides of the lane on the road surface are searched for in the geometrically corrected criterion image, and the position of an intersection therebetween is calculated, thereby calculating the position of the vanishing point in the criterion image. Then, the amount of horizontal movement and the amount of vertical movement of the criterion image are calculated so that the calculated position of the vanishing point matches the design value of the optical axis position of the optical element unit 101a of the imaging unit 100a. Similarly, also for the reference image, the white lines on the left and right sides of the lane on the road surface are searched for in the geometrically corrected reference image, and the position of an intersection therebetween is calculated, thereby calculating the position of the vanishing point in the reference image. Then, the amount of horizontal movement of the reference image is calculated so that the calculated horizontal position of the vanishing point matches the design value of the optical axis position of the optical element unit 101b of the imaging unit 100b. After the amounts of horizontal movement of the criterion image and the reference image and the amount of vertical movement of the criterion image are calculated as described above, the geometric calibration unit 125 stores the values thereof as the geometric correction changed information in the geometric correction changed information storing unit 115.

In Step 502, the geometric calibration unit 125 determines whether or not the geometrically corrected criterion image and the geometrically corrected reference image read in Step 501 are images of the first frame acquired after the stereo camera is started, or determines whether or not Step 520 to be described later has been performed in the previous geometric calibration processing of Step 208 performed for the previous frame. In a case where any one of these conditions is satisfied, the processing proceeds to Step 503, and in a case where no condition is satisfied, the processing proceeds to Step 504.

In Step 503, the geometric calibration unit 125 detects the vertical edge and the horizontal edge of the criterion image. Here, the geometric calibration unit 125 detects the vertical edge and the horizontal edge in the geometrically corrected criterion image read in Step 501 by the same method as in Step 304 described above. That is, a difference between the brightness value of each pixel in the geometrically corrected criterion image and the brightness value of a pixel on the right side of each pixel is calculated, and whether or not the absolute value of the difference is equal to or larger than a predetermined threshold value is determined. In a case where the absolute value is equal to or larger than the threshold value, it is determined that there is a vertical edge, and the value of the vertical edge is set to "1". In a case where the absolute value is not equal to or larger than the threshold value, the value of the vertical edge is set to "0", and the vertical edge is calculated for each pixel of the criterion image. Further, a difference between the brightness value of each pixel in the geometrically corrected criterion image and the brightness value of a pixel on the upper side of each pixel is calculated, and whether or not the absolute value of the difference is equal to or larger than a predetermined threshold value is determined. In a case where the absolute value is equal to or larger than the threshold value, it is determined that there is a horizontal edge, and the value of the horizontal edge is set to "1". In a case where the absolute value is not equal to or larger than the threshold value, the value of the horizontal edge is set to "0", and the horizontal edge is calculated for each pixel of the criterion image.

After detecting the vertical edge and the horizontal edge of the criterion image, the geometric calibration unit 125 stores, in the geometric correction changed information storing unit 115, the geometrically corrected criterion image, the geometrically corrected reference image, and the parallax image that are read, together with the values of the vertical edge and the horizontal edge of each pixel. By doing so, such information can also be used in the subsequent pieces of processing. After performing the processing of Step 503, the processing of Step 208 is terminated, and the processing proceeds to Step 209.

In Step 504, the geometric calibration unit 125 determines whether or not Step 503 has been performed in the previous geometric calibration processing of Step 208 performed for the previous frame. In a case where Step 503 has been performed in the previous geometric calibration processing, the processing proceeds to Step 505, and in a case where Step 503 has not been performed in the previous geometric calibration processing, the processing proceeds to Step 506.

In Step 505, the geometric calibration unit 125 detects the feature point in a predetermined region of the criterion image in which the vertical edge and the horizontal edge are detected in Step 503. Here, for example, the criterion image is divided into four regions, a first region to a fourth region, and the detection of the feature point is performed on the first region as a detection target. Specifically, the geometric calibration unit 125 reads, from the geometric correction changed information storing unit 115, the values of the vertical edge and the horizontal edge of each pixel of the criterion image stored in Step 503. Then, these values are checked for each pixel in the first region to detect, as the feature point, a pixel in which both the vertical edge and the horizontal edge exist.

Note that any method can be used as a method for dividing the geometrically corrected criterion image into the first to fourth regions. For example, the geometrically corrected criterion image may be divided into four regions, an upper-left region, an upper-right region, a lower-left region, and a lower-right region, and the four regions may be the first to fourth regions, or the geometrically corrected criterion image may be divided into four regions by being quartered in the vertical or horizontal direction, and the four regions may be the first to fourth regions. At this time, the area of each region may be the same, or the area may be different for each region according to the clearness of the feature point.

After detecting the feature point in the first region of the criterion image, the geometric calibration unit 125 stores the position of each detected feature point in the geometric correction changed information storing unit 115. After performing the processing of Step 505, the processing of Step 208 is terminated, and the processing proceeds to Step 209.

In Step 506, the geometric calibration unit 125 determines whether or not Step 505 has been performed in the previous geometric calibration processing of Step 208 performed for the previous frame. In a case where Step 505 has been performed in the previous geometric calibration processing, the processing proceeds to Step 507, and in a case where Step 505 has not been performed in the previous geometric calibration processing, the processing proceeds to Step 508.

In Step 507, the geometric calibration unit 125 detects the feature point in a predetermined region of the criterion image in which the vertical edge and the horizontal edge are detected in Step 503. Here, for example, the criterion image is divided into four regions, a first region to a fourth region, and the detection of the feature point is performed on the second region as the detection target. Specifically, the geometric calibration unit 125 reads, from the geometric correction changed information storing unit 115, the values of the vertical edge and the horizontal edge of each pixel of the criterion image stored in Step 503. Then, these values are checked for each pixel in the second region to detect, as the feature point, a pixel in which both the vertical edge and the horizontal edge exist.

After detecting the feature point in the second region of the criterion image, the geometric calibration unit 125 stores the position of each detected feature point in the geometric correction changed information storing unit 115. After performing the processing of Step 507, the processing of Step 208 is terminated, and the processing proceeds to Step 209.

In Step 508, the geometric calibration unit 125 determines whether or not Step 507 has been performed in the previous geometric calibration processing of Step 208 performed for the previous frame. In a case where Step 507 has been performed in the previous geometric calibration processing, the processing proceeds to Step 509, and in a case where Step 507 has not been performed in the previous geometric calibration processing, the processing proceeds to Step 510.

In Step 509, the geometric calibration unit 125 detects the feature point in a predetermined region of the criterion image in which the vertical edge and the horizontal edge are detected in Step 503. Here, for example, the criterion image is divided into four regions, a first region to a fourth region, and the detection of the feature point is performed on the third region as the detection target. Specifically, the geometric calibration unit 125 reads, from the geometric correction changed information storing unit 115, the values of the vertical edge and the horizontal edge of each pixel of the criterion image stored in Step 503. Then, these values are checked for each pixel in the third region to detect, as the feature point, a pixel in which both the vertical edge and the horizontal edge exist.

After detecting the feature point in the third region of the criterion image, the geometric calibration unit 125 stores the position of each detected feature point in the geometric correction changed information storing unit 115. After performing the processing of Step 509, the processing of Step 208 is terminated, and the processing proceeds to Step 209.

In Step 510, the geometric calibration unit 125 determines whether or not Step 509 has been performed in the previous geometric calibration processing of Step 208 performed for the previous frame. In a case where Step 509 has been performed in the previous geometric calibration processing, the processing proceeds to Step 511, and in a case where Step 509 has not been performed in the previous geometric calibration processing, the processing proceeds to Step 512 of FIG. 6.

In Step 511, the geometric calibration unit 125 detects the feature point in a predetermined region of the criterion image in which the vertical edge and the horizontal edge are detected in Step 503. Here, for example, the criterion image is divided into four regions, a first region to a fourth region, and the detection of the feature point is performed on the fourth region as the detection target. Specifically, the geometric calibration unit 125 reads, from the geometric correction changed information storing unit 115, the values of the vertical edge and the horizontal edge of each pixel of the criterion image stored in Step 503. Then, these values are checked for each pixel in the fourth region to detect, as the feature point, a pixel in which both the vertical edge and the horizontal edge exist.

After detecting the feature point in the fourth region of the criterion image, the geometric calibration unit 125 stores the position of each detected feature point in the geometric correction changed information storing unit 115. After performing the processing of Step 511, the processing of Step 208 is terminated, and the processing proceeds to Step 209.

In Step 512, the geometric calibration unit 125 determines whether or not Step 511 has been performed in the previous geometric calibration processing of Step 208 performed for the previous frame. In a case where Step 511 has been performed in the previous geometric calibration processing, the processing proceeds to Step 513, and in a case where Step 511 has not been performed in the previous geometric calibration processing, the processing proceeds to Step 514.

In Step 513, the geometric calibration unit 125 detects a corresponding point from the reference image for each feature point in the first region of the criterion image detected in Step 505, and calculates the vertical shift between the feature point and the corresponding point. Here, for example, the vertical shift between the feature point in the first region of the criterion image and the corresponding point of the reference image is calculated by the same method as in Steps 305 and 306 of FIG. 3. Specifically, the geometric calibration unit 125 reads, from the geometric correction changed information storing unit 115, the geometrically corrected criterion image, the geometrically corrected reference image, and the parallax image stored in Step 503, and the position of each feature point in the first region of the criterion image stored in Step 505. Then, a feature point region including the feature point of the first region is extracted from the geometrically corrected criterion image for each feature point, and a predetermined range including the position obtained by moving the position of the feature point region by the parallax on the geometrically corrected reference image is set as the SAD calculation target range. Then, the SAD in the calculation target range for the feature point region is calculated on the basis of the brightness values of the feature point region of the criterion image and the calculation target range of the reference image, and the position where the SAD is the smallest is detected as the position of the corresponding point. At this time, similarly to Step 306, a corresponding point region including the corresponding point may be set on the geometrically corrected reference image, the SAD for the feature point region may be calculated for each region shifted by one pixel in the vertical direction of the corresponding point region, and the position of the corresponding point may be calculated in a unit of subpixel by performing equiangular linear fitting using the SAD.

After detecting the position of the corresponding point on the reference image for each feature point in the first region of the criterion image, the geometric calibration unit 125 calculates, as the vertical shift between the feature point and the corresponding point, a difference between the position of each feature point and the position of each corresponding point in the vertical direction, and stores the difference in the geometric correction changed information storing unit 115. Note that in a case where no feature point is detected in the first region of the criterion image in Step 505, the vertical shift between the feature point and the corresponding point in the first region is not calculated in Step 513. After performing the processing of Step 513, the processing of Step 208 is terminated, and the processing proceeds to Step 209.

In Step 514, the geometric calibration unit 125 determines whether or not Step 513 has been performed in the previous geometric calibration processing of Step 208 performed for the previous frame. In a case where Step 513 has been performed in the previous geometric calibration processing, the processing proceeds to Step 515, and in a case where Step 513 has not been performed in the previous geometric calibration processing, the processing proceeds to Step 516.

In Step 515, the geometric calibration unit 125 detects a corresponding point from the reference image for each feature point in the second region of the criterion image detected in Step 507, and calculates the vertical shift between the feature point and the corresponding point. Here, as in Step 513, the vertical shift between the feature point in the second region of the criterion image and the corresponding point of the reference image is calculated by the same method as in Steps 305 and 306 of FIG. 3. Specifically, the geometric calibration unit 125 reads, from the geometric correction changed information storing unit 115, the geometrically corrected criterion image, the geometrically corrected reference image, and the parallax image stored in Step 503, and the position of each feature point in the second region of the criterion image stored in Step 507. Then, a feature point region including the feature point of the second region is extracted from the geometrically corrected criterion image for each feature point, and a predetermined range including the position obtained by moving the position of the feature point region by the parallax on the geometrically corrected reference image is set as the SAD calculation target range. Then, the SAD in the calculation target range for the feature point region is calculated on the basis of the brightness values of the feature point region of the criterion image and the calculation target range of the reference image, and the position where the SAD is the smallest is detected as the position of the corresponding point. At this time, similarly to Step 306, a corresponding point region including the corresponding point may be set on the geometrically corrected reference image, the SAD for the feature point region may be calculated for each region shifted by one pixel in the vertical direction of the corresponding point region, and the position of the corresponding point may be calculated in a unit of subpixel by performing equiangular linear fitting using the SAD.

After detecting the position of the corresponding point on the reference image for each feature point in the second region of the criterion image, the geometric calibration unit 125 calculates, as the vertical shift between the feature point and the corresponding point, a difference between the position of each feature point and the position of each corresponding point in the vertical direction, and stores the difference in the geometric correction changed information storing unit 115. Note that in a case where no feature point is detected in the second region of the criterion image in Step 507, the vertical shift between the feature point and the corresponding point in the second region is not calculated in Step 515. After performing the processing of Step 515, the processing of Step 208 is terminated, and the processing proceeds to Step 209.

In Step 516, the geometric calibration unit 125 determines whether or not Step 515 has been performed in the previous geometric calibration processing of Step 208 performed for the previous frame. In a case where Step 515 has been performed in the previous geometric calibration processing, the processing proceeds to Step 517, and in a case where Step 515 has not been performed in the previous geometric calibration processing, the processing proceeds to Step 518.

In Step 517, the geometric calibration unit 125 detects a corresponding point from the reference image for each feature point in the third region of the criterion image detected in Step 509, and calculates the vertical shift between the feature point and the corresponding point. Here, as in Steps 513 and 515, the vertical shift between the feature point in the third region of the criterion image and the corresponding point of the reference image is calculated by the same method as in Steps 305 and 306 of FIG. 3. Specifically, the geometric calibration unit 125 reads, from the geometric correction changed information storing unit 115, the geometrically corrected criterion image, the geometrically corrected reference image, and the parallax image stored in Step 503, and the position of each feature point in the third region of the criterion image stored in Step 509. Then, a feature point region including the feature point of the third region is extracted from the geometrically corrected criterion image for each feature point, and a predetermined range including the position obtained by moving the position of the feature point region by the parallax on the geometrically corrected reference image is set as the SAD calculation target range. Then, the SAD in the calculation target range for the feature point region is calculated on the basis of the brightness values of the feature point region of the criterion image and the calculation target range of the reference image, and the position where the SAD is the smallest is detected as the position of the corresponding point. At this time, similarly to Step 306, a corresponding point region including the corresponding point may be set on the geometrically corrected reference image, the SAD for the feature point region may be calculated for each region shifted by one pixel in the vertical direction of the corresponding point region, and the position of the corresponding point may be calculated in a unit of subpixel by performing equiangular linear fitting using the SAD.

After detecting the position of the corresponding point on the reference image for each feature point in the third region of the criterion image, the geometric calibration unit 125 calculates, as the vertical shift between the feature point and the corresponding point, a difference between the position of each feature point and the position of each corresponding point in the vertical direction, and stores the difference in the geometric correction changed information storing unit 115. Note that in a case where no feature point is detected in the third region of the criterion image in Step 509, the vertical shift between the feature point and the corresponding point in the third region is not calculated in Step 517. After performing the processing of Step 517, the processing of Step 208 is terminated, and the processing proceeds to Step 209.

In Step 518, the geometric calibration unit 125 determines whether or not Step 517 has been performed in the previous geometric calibration processing of Step 208 performed for the previous frame. In a case where Step 517 has been performed in the previous geometric calibration processing, the processing proceeds to Step 519, and in a case where Step 517 has not been performed in the previous geometric calibration processing, the processing proceeds to Step 520.

In Step 519, the geometric calibration unit 125 detects a corresponding point from the reference image for each feature point in the fourth region of the criterion image detected in Step 511, and calculates the vertical shift between the feature point and the corresponding point. Here, as in Steps 513, 515, and 517, the vertical shift between the feature point in the fourth region of the criterion image and the corresponding point of the reference image is calculated by the same method as in Steps 305 and 306 of FIG. 3. Specifically, the geometric calibration unit 125 reads, from the geometric correction changed information storing unit 115, the geometrically corrected criterion image, the geometrically corrected reference image, and the parallax image stored in Step 503, and the position of each feature point in the fourth region of the criterion image stored in Step 511. Then, a feature point region including the feature point of the fourth region is extracted from the geometrically corrected criterion image for each feature point, and a predetermined range including the position obtained by moving the position of the feature point region by the parallax on the geometrically corrected reference image is set as the SAD calculation target range. Then, the SAD in the calculation target range for the feature point region is calculated on the basis of the brightness values of the feature point region of the criterion image and the calculation target range of the reference image, and the position where the SAD is the smallest is detected as the position of the corresponding point. At this time, similarly to Step 306, a corresponding point region including the corresponding point may be set on the geometrically corrected reference image, the SAD for the feature point region may be calculated for each region shifted by one pixel in the vertical direction of the corresponding point region, and the position of the corresponding point may be calculated in a unit of subpixel by performing equiangular linear fitting using the SAD.

After detecting the position of the corresponding point on the reference image for each feature point in the fourth region of the criterion image, the geometric calibration unit 125 calculates, as the vertical shift between the feature point and the corresponding point, a difference between the position of each feature point and the position of each corresponding point in the vertical direction, and stores the difference in the geometric correction changed information storing unit 115. Note that in a case where no feature point is detected in the fourth region of the criterion image in Step 511, the vertical shift between the feature point and the corresponding point in the fourth region is not calculated in Step 519. After performing the processing of Step 519, the processing of Step 208 is terminated, and the processing proceeds to Step 209.

In Step 520, the geometric calibration unit 125 calculates the amount of vertical movement of the reference image on the basis of the vertical shifts between the feature points and the corresponding points in the first to fourth regions calculated in Steps 513, 515, 517, and 519, respectively. Specifically, the geometric calibration unit 125 reads, from the geometric correction changed information storing unit 115, the vertical shifts between the respective feature points and the respective corresponding points in the first to fourth regions stored in Steps 513, 515, 517, and 519, respectively. Further, the amount of vertical movement of the reference image is read from the geometric correction changed information storing unit 115. Then, the average value of these vertical shifts is calculated, and the average value of the vertical shifts between the object regions is added to the read amount of vertical movement of the reference image to calculate the amount of vertical movement of the reference image for correcting the vertical shift between the criterion image and the reference image. After calculating the amount of vertical movement of the reference image on the basis of the vertical shift between the feature point and the corresponding points detected for each of the first to fourth regions as described above, the geometric calibration unit 125 stores the value as the geometric correction changed information in the geometric correction changed information storing unit 115. After performing Step 520, the processing of Step 208 is terminated, and the processing proceeds to Step 209.

In the related art, as described above, in a case where only the white lines on both sides of the lane on the road surface are imaged after the start of the stereo camera in a state where the vertical shift between the criterion image and the reference image occurs due to the mechanical displacement in the imaging direction of the imaging units 100a and 100b caused by aging, thermal change, shock vibration, and the like, it is not possible to correct the vertical shift between the criterion image and the reference image. Under such circumstances, in a case where the zebra zone as illustrated in FIG. 7, for example, appears on the road surface, an error may occur in parallax, and the zebra zone region may be erroneously estimated as a solid object.

(See [0004], and [0051] to [0054] for details)

On the other hand, in the stereo camera of the present embodiment as described above, in Step 205 of FIG. 2, the object region vertical shift detecting unit 122 detects the vertical shift between the object regions, and in Step 206, the object region solid object determining unit 123 determines the solid object by using the detection result. As a result, even in a case where there is a vertical shift between the criterion image and the reference image, it is possible to accurately determine the solid object within the current frame and prevent erroneous determination of the solid object.

Further, in the stereo camera of the present embodiment, in Step 311 of FIG. 3, the object region vertical shift detecting unit 122 calculates the amount of vertical movement of the reference image on the basis of the vertical shift between the object regions calculated up to the current frame. In Step 202, the vertical shift between the criterion image and the reference image can be appropriately corrected by performing the geometric correction of the reference image using the amount of vertical movement.

Further, in the stereo camera of the present embodiment, in Step 301 of FIG. 3, whether or not the amount of vertical movement of the reference image has not been calculated and whether or not there is an object estimated as a solid object are determined, and only in a case where these conditions are satisfied, the object region vertical shift detecting unit 122 performs the pieces of processing of Step 302 and subsequent steps to detect the vertical shift between the object regions. Therefore, in a case where the amount of vertical movement of the reference image is already calculated and in a case where there is no object estimated as a solid object, the operation of the object region vertical shift detecting unit 122 can be stopped to reduce the processing load. As a result, it is possible to suppress an increase in temperature of the calculating unit 110 and reduce the risk that the processing of the calculating unit 110 cannot be completed within the frame rate and is interrupted in the middle.

Further, in the stereo camera of the present embodiment, in Step 401 of FIG. 4, whether or not there is an object estimated as a solid object are determined, and only in a case where this condition is satisfied, the object region solid object determining unit 123 performs the pieces of processing of Step 402 and subsequent steps to determine the solid object. Therefore, in a case where there is no object estimated as a solid object, the operation of the object region solid object determining unit 123 can be stopped to reduce the processing load. As a result, it is possible to suppress an increase in temperature of the calculating unit 110 and reduce the risk that the processing of the calculating unit 110 cannot be completed within the frame rate and is interrupted in the middle.

Further, in the stereo camera of the present embodiment, in Step 303 of FIG. 3, whether or not it has been determined in the previous processing that the object estimated as a solid object is not a solid object is determined, and in a case where it has been determined that the object estimated as a solid object is not a solid object, the object region vertical shift detecting unit 122 does not detect the vertical shift between the object regions. Therefore, for an object that is already determined as not a solid object, the processing of the object region vertical shift detecting unit 122 can be omitted to reduce the processing load. As a result, it is possible to suppress an increase in temperature of the calculating unit 110 and reduce the risk that the processing of the calculating unit 110 cannot be completed within the frame rate and is interrupted in the middle.

Further, in the stereo camera of the present embodiment, whether or not the amount of vertical movement of the reference image has not been calculated is determined in Step 402 of FIG. 4, whether or not it has been determined in the previous processing that the object estimated as a solid object is not a solid object is determined in Step 403, and whether or not the vertical shift between the object regions is equal to or larger than the threshold value is determined in Step 404. Then, in a case where the amount of vertical movement of the reference image is already calculated, in a case where it has been determined that the object is not a solid object, and in a case where the vertical shift between the object regions is smaller than the threshold value, the object region solid object determining unit 123 determines the solid object in Step 407 without calculating the parallax when the vertical shift between the object regions is corrected. Therefore, in a case where the amount of vertical movement of the reference image is already calculated, or for an object that is already determined as not a solid object or for an object that is less affected by the vertical shift between the object regions, the processing of the object region solid object determining unit 123 can be omitted to reduce the processing load. As a result, it is possible to suppress an increase in temperature of the calculating unit 110 and reduce the risk that the processing of the calculating unit 110 cannot be completed within the frame rate and is interrupted in the middle.

Note that the stereo camera of the present invention is not limited to the embodiment as described above, and can be variously modified and applied. Hereinafter, modified examples of the stereo camera of the present invention will be described.

(Modified Example 1)

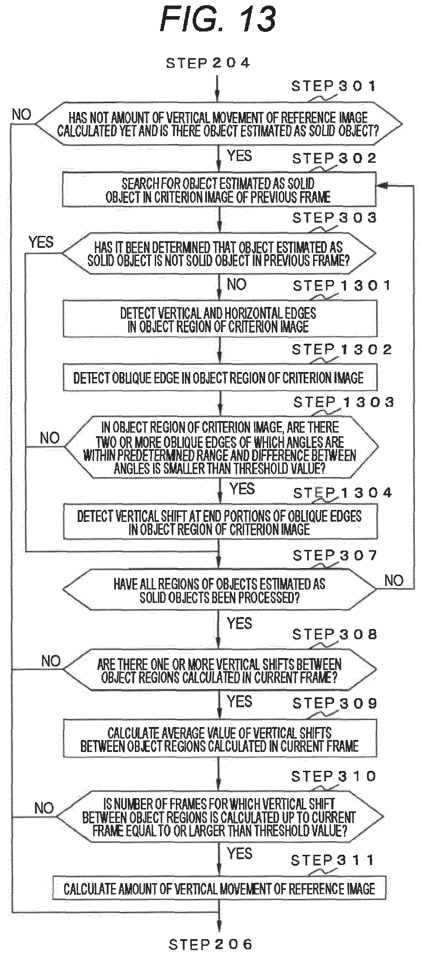

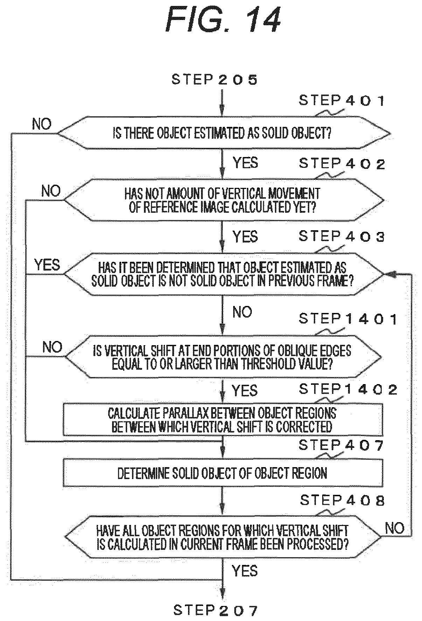

In the present modified example, an example in which an operation procedure of FIG. 13 is performed instead of the operation procedure illustrated in FIG. 3 in the processing of detecting, by the object region vertical shift detecting unit 122, the vertical shift between the object regions in Step 205 of FIG. 2, and an operation procedure of FIG. 14 is performed instead of the operation procedure illustrated in FIG. 4 in solid object determination processing performed by the object region solid object determining unit 123 in Step 206 of FIG. 2 will be described. Note that, in the operation procedure of FIG. 13, the respective pieces of processing of Steps 301 to 303 and 307 to 311 are the same as those described with reference to FIG. 3, and in the operation procedure of FIG. 14, the respective pieces of processing of Steps 401 to 403, 407, and 408 are the same as those described with reference to FIGS. 3 and 4, and thus, only Steps 1301 to 1304 and Steps 1401 to 1402, which are different from those in FIGS. 3 and 4, will be described below.

In Step 1301, the object region vertical shift detecting unit 122 detects the vertical edge and the horizontal edge in the object region of the criterion image. Here, the object region vertical shift detecting unit 122 detects the vertical edge and the horizontal edge in the object region of the geometrically corrected criterion image that has been determined as not a solid object in the previous frame in Step 302, by the same method as in Step 304 of FIG. 3. That is, a difference between the brightness value of each pixel in the object region and the brightness value of a pixel on the right side of each pixel in the geometrically corrected criterion image is calculated, and whether or not the absolute value of the difference is equal to or larger than a predetermined threshold value is determined. In a case where the absolute value is equal to or larger than the threshold value, it is determined that there is a vertical edge in the object region, and the value of the vertical edge is set to "1". In a case where the absolute value is not equal to or larger than the threshold value, the value of the vertical edge is set to "0", and the vertical edge is calculated for each pixel in the object region of the criterion image. Further, a difference between the brightness value of each pixel in the object region and the brightness value of a pixel on the upper side of each pixel in the geometrically corrected criterion image is calculated, and whether or not the absolute value of the difference is equal to or larger than a predetermined threshold value is determined. In a case where the absolute value is equal to or larger than the threshold value, it is determined that there is a horizontal edge in the object region, and the value of the horizontal edge is set to "1". In a case where the absolute value is not equal to or larger than the threshold value, the value of the horizontal edge is set to "0", and the horizontal edge is calculated for each pixel in the object region of the criterion image.

In Step 1302, the object region vertical shift detecting unit 122 detects a diagonal edge in the object region of the criterion image on the basis of the vertical edge and the horizontal edge detected in Step 1301. Specifically, for example, the object region vertical shift detecting unit 122 calculates, as the edge in the object region, the logical sum of the vertical edge and the horizontal edge obtained in Step 1301. One or more diagonal edges are detected by performing the Hough transform using the edge in the object region and calculating the position and angle of an edge linearly extending in a diagonal direction in the object region. After detecting one or more diagonal edges in the object region of the criterion image, the object region vertical shift detecting unit 122 stores the positions and angles of one or more diagonal edges in the object region information storing unit 116. Note that the diagonal edge detected here may include those extending in the horizontal direction or the vertical direction in the object region.

In Step 1303, the object region vertical shift detecting unit 122 determines whether or not there are two or more diagonal edges satisfying predetermined conditions in the object region of the criterion image on the basis of the position and angle of each diagonal edge detected in Step S1302. Specifically, for example, in a case where there are two or more diagonal edges of which angles calculated in Step 1302 are within a predetermined range and a difference between the angles is smaller than a predetermined threshold value, the object region vertical shift detecting unit 122 determines that there are two or more diagonal edges satisfying the conditions in the object region of the criterion image, and the processing proceeds to Step 1304. On the other hand, in a case where there is no diagonal edge satisfying these conditions, the processing proceeds to Step 307. Note that the angle range of the diagonal edge is set so as not to include the horizontal direction, but to include the vertical direction, for example, is set to a range of - 45 to +45° or the like with respect to the horizontal direction. This is because the vertical shift between the criterion image and the reference image may greatly affect the parallax error in a case where there is a diagonal edge whose angle with respect to the horizontal direction is small.

In Step 1304, the object region vertical shift detecting unit 122 detects, as the vertical shift between the object regions of the criterion image and the reference image, the vertical shift between the criterion image and the reference image at an end portion of the diagonal edge satisfying the determination condition of Step S1303 in the object region of the criterion image. At this time, for example, the object region vertical shift detecting unit 122 detects the position of the end portion of the diagonal edge in the object region of the geometrically corrected criterion image on the basis of the position and angle of the diagonal edge calculated in Step 1302. Then, a predetermined range including the position obtained by moving the detected position of the end of the diagonal edge by the parallax on the geometrically corrected reference image is set as the SAD calculation target range. Then, the SAD in the calculation target range for the end of the diagonal edge is calculated on the basis of the brightness values of a predetermined range around the end of the diagonal edge in the criterion image and the calculation target range of the reference image, and the position where the SAD is the smallest is detected as the position of a corresponding point for the edge of the diagonal edge. At this time, similarly to Step 306 and Step 513, a region including the corresponding point for the end of the diagonal edge may be set on the geometrically corrected reference image, the SAD for the end of the diagonal edge may be calculated for each region shifted by one pixel in the vertical direction of the region, and the position of the corresponding point for the end of the diagonal edge may be calculated in a unit of subpixel by performing equiangular linear fitting using the SAD.

After detecting, in the reference image, the position of the corresponding point for the end of the diagonal edge in the object region of the criterion image, the object region vertical shift detecting unit 122 calculates, as the vertical shift between the criterion image and the reference image at the end portion of the diagonal edge, a difference in position between the end of the diagonal edge and the corresponding point therefor in the vertical direction, and stores the difference in the geometric correction changed information storing unit 115. By performing such processing for all the diagonal edges satisfying the determination condition of Step 1303, the vertical shift at the end portion of each diagonal edge in the object region of the geometrically corrected criterion image can be detected as the vertical shift between the object regions. Here, since the end portion of the diagonal edge includes edges in two different directions, the end portion of the diagonal edge corresponds to the above-described feature point, and the corresponding point corresponding thereto can be obtained on the reference image.

In Step 1401, the object region solid object determining unit 123 determines whether or not the vertical shift between the object regions calculated for the object by the object region vertical shift detecting unit 122 in Step 1304, that is, the vertical shift at the end portion of the diagonal edge, is equal to or larger than a predetermined threshold value. In a case where the vertical shift at the end portion of the diagonal edge is equal to or larger than the threshold value, the processing proceeds to Step 1402, and in a case where the vertical shift at the end portion of the diagonal edge is smaller than the threshold value, the processing proceeds to Step 407.

In Step 1402, the object region solid object determining unit 123 calculates parallax between the object regions between which the vertical shift at the end of the diagonal edge is corrected. At this time, the object region solid object determining unit 123 reads, from the object region information storing unit 116, the position and angle of the diagonal edge in the object region stored in Step 1302, reads, from the geometric correction changed information storing unit 115, the vertical shift at the end portion of the diagonal edge stored in Step 1304 in the current processing, and reads, from the parallax image storing unit 113, the parallax image. Then, parallax Dc between the object region between which the vertical shift at the end portion of the diagonal edge is corrected by using, for example, the following Equation (7) on the basis of these information. In Equation (7), De represents the parallax before correcting the vertical shift, $\Delta V$ represents the vertical shift at the end portion of the diagonal edge, and $\theta e$ represents the angle of the diagonal edge.

$$Dc = De + \Delta V/\tan\theta e \qquad (7)$$

In the stereo camera of the present modified example described above, in Steps 1301 to 1303 of FIG. 13, the diagonal edge is detected in the object region of the criterion image, and in a case where the diagonal edge satisfies the condition for erroneous determination of a solid object, that is, only in a case where there are two or more diagonal edges of which a difference in angle is smaller than the threshold value, the object region vertical shift detecting unit 122 detects the vertical shift in Step 1304. Therefore, when there is no possibility that erroneous determination of a solid object is made, the processing of the object region vertical shift detecting unit 122 can be omitted to reduce the processing load. As a result, it is possible to suppress an increase in temperature of the calculating unit 110 and reduce the risk that the processing of the calculating unit 110 cannot be completed within the frame rate and is interrupted in the middle.

Further, in the stereo camera of the present modified example, in Step 1401 of FIG. 14, whether or not the vertical shift at the end portion of the diagonal edge is equal to or larger than a threshold value is determined. In a case where the vertical shift at the end portion of the diagonal edge is smaller than the threshold value, the object region solid object determining unit 123 determines the solid object in Step 407 without calculating the parallax between the object regions between which the vertical shift at the end of the diagonal edge is corrected in Step 1402. Therefore, for an object that is less affected by the vertical shift, the processing of the object region solid object determining unit 123 can be omitted to reduce the processing load. As a result, it is possible to suppress an increase in temperature of the calculating unit 110 and reduce the risk that the processing of the calculating unit 110 cannot be completed within the frame rate and is interrupted in the middle.

(Modified Example 2)

In the first embodiment and Modified Example 1 described above, in Step 301 of FIGS. 3 and 13, whether or not the amount of vertical movement of the reference image has not been calculated and whether or not there is an object estimated as a solid object by the solid object estimating unit 121 in Step 204 are determined, and only in a case where all of these conditions are satisfied, the pieces of processing of Step 302 and subsequent steps are performed to detect the vertical shift between the object regions of the criterion image and the reference image. However, regardless of whether or not the amount of vertical movement of the reference image has not been calculated, in a case where there is an object estimated as a solid object, the vertical shift between the object regions of the criterion image and the reference image may be detected. In this case, even in a case where the mechanical displacement in the imaging direction of the imaging units 100a and 100b occurs due to aging, thermal change, shock vibration, and the like during the operation of the stereo camera, the parallax error caused thereby can be corrected, and it is possible to prevent a diagonal line pattern on the road surface from being erroneously determined as a solid object.

(Modified Example 3)

In the first embodiment and Modified Example 1 described above, an example in which the criterion image is divided into four regions, the first region to the fourth region, the feature point is detected in each region for each frame, and the vertical shift between the feature point and the corresponding point is calculated in Steps 504 to 519 of FIGS. 5 and 6 has been described, but the number of regions into which the criterion image is divided is not limited to four. The criterion image can be divided into an arbitrary number of regions to perform these pieces of processing, according to the calculation processing performance of the calculating unit 110, the frame rate at which the imaging units 100a and 100b output the captured image, and the like.

(Modified Example 4)

In the first embodiment and Modified Examples 1 and 2 described above, an example, in which the amount of vertical movement of the reference image is calculated on the basis of the vertical shift between the object regions and the vertical shift between the feature point and the corresponding point detected for each of the first to fourth regions in Step 311 of FIGS. 3 and 13, and Step 520 of FIG. 6, and the processing is branched on the basis of whether or not the amount of vertical movement of the reference image has been calculated in Step 301 of FIGS. 3 and 13 and Step 402 of FIGS. 4 and 14, has been described, but the parameter for correcting the criterion image and the reference image is not limited only to the amount of vertical movement of the reference image. That is, even in a case where the amount of vertical movement of the criterion image or both of the amount of vertical movement of the criterion image and the amount of vertical movement of the reference image are calculated on the basis of the vertical shift between the object regions and the vertical shift between the feature point and the corresponding point detected for each of the first to fourth regions in Step 311 of FIGS. 3 and 13, and Step 520 of FIG. 6, and the processing is branched on the basis of whether or not the amount of vertical movement of the criterion image or both of the amount of vertical movement of the criterion image and the amount of vertical movement of the reference image have been calculated in Step 301 of FIGS. 3 and 13 and Step 402 of FIGS. 4 and 14, the vertical shift between the criterion image and the reference image can be corrected.

According to the above-described embodiment and modified examples of the present invention described above, the following effects are exhibited.

(1) The calculating unit 110, which is the image processing device, includes the criterion image input unit 118a and the reference image input unit 118b, the geometric correction unit 119, the parallax calculating unit 120, the solid object estimating unit 121, the object region vertical shift detecting unit 122, and the object region solid object determining unit 123. The criterion image input unit 118a and the reference image input unit 118b input the criterion image and the reference image captured by the pair of imaging units 100a and 100b constituting the stereo camera at each predetermined frame rate, respectively (Step 201). The geometric correction unit 119 performs geometric correction of the criterion image and the reference image by using the geometric correction information preset and stored in the geometric correction information storing unit 114 (Step 202). The parallax calculating unit 120 calculates the parallax image based on the criterion image and the reference image that are geometrically corrected by the geometric correction unit 119 (Step 203). The solid object estimating unit 121 performs the solid object estimation for estimating whether or not an object included in the criterion image and the reference image is a solid object on the basis of the parallax image calculated by the parallax calculating unit 120 (Step 204). The object region vertical shift detecting unit 122 uses the criterion image and the reference image of the same frame as that for which the solid object estimation has been performed to detect a vertical shift between an object region including the object in the criterion image and an object region including the object in the reference image in a case where the object is estimated as a solid object by the solid object estimating unit 121 (Step 205). The object region solid object determining unit 123 calculates the parallax of the object on the basis of the vertical shift between the object region of the criterion image and the object region of the reference image detected by the object region vertical shift detecting unit 122, and determines whether or not the object is a solid object (Step 206). Accordingly, even when there is a vertical shift in a stereo image, a solid object can be accurately detected from the stereo image.

(2) The object region vertical shift detecting unit 122 detects a feature point in which both the vertical edge and the horizontal edge exist in the object region of the criterion image (Step 304), detects a corresponding point corresponding to the feature point in the object region of the reference image (Step 305), and detects, as the vertical shift between the object region of the criterion image and the object region of the reference image, a vertical shift between the feature point in the object region of the criterion image and the corresponding point in the object region of the reference image (Step 306). Accordingly, it is possible to reliably detect the vertical shift between the object regions from the images of one frame.

(3) Further, the object region vertical shift detecting unit 122 detects, as a diagonal edge, a linear edge extending within a predetermined angle range in the object region of the criterion image (Step 1302), and detects, in a case where a plurality of diagonal edges of which a difference in angle is smaller than a predetermined threshold value have been detected (Step 1303), a vertical shift between an end portion of the diagonal edge in the object region of the criterion image and an end portion of the diagonal edge in the object region of the reference image as the vertical shift between the object region of the criterion image and the object region of the reference image (Step 1304). Even in this case, it is possible to reliably detect the vertical shift between the object regions from the images of one frame.

(4) The object region solid object determining unit 123 corrects the vertical shift between the object region of the criterion image and the object region of the reference image and calculates the parallax between the object region of the geometrically corrected criterion image and the object region of the geometrically corrected reference image to calculate the parallax of the object (Steps 405 and 406, or Step 1402), and determines whether or not the object is a solid object (Step 407). Accordingly, it is possible to reliably determine whether or not the object estimated as a solid object by the solid object estimating unit 121 is actually a solid object.

(5) The object region vertical shift detecting unit 122 calculates any one or both of the amount of vertical movement of the criterion image and the amount of vertical movement of the reference image on the basis of the vertical shift between the object region of the criterion image and the object region of the reference image detected in Step 306 or Step 1304 (Step 311). In Step 202, the geometric correction unit 119 performs the geometric correction of the criterion image and the reference image by using any one or both of the amount of vertical movement of the criterion image and the amount of vertical movement of the reference image calculated by the object region vertical shift detecting unit 122. Accordingly, even when there is a vertical shift in a stereo image, it is possible to accurately correct the shift.

(6) When the number of times of detection of the vertical shift between the object region of the criterion image and the object region of the reference image is equal or larger than a predetermined threshold value (Step 310: "Yes"), the object region vertical shift detecting unit 122 calculates any one or both of the amount of vertical movement of the criterion image and the amount of vertical movement of the reference image in Step 311. Accordingly, it is possible to accurately detect the vertical shift between the object regions in the criterion image and the reference image by removing noise, such that any one or both of the amount of vertical movement of the criterion image and the amount of vertical movement of the reference image can be accurately calculated.

(7) In a case where any one or both of the amount of vertical movement of the criterion image and the amount of vertical movement of the reference image are already calculated in Step 311 of the previous processing (Step 301:

"No"), the object region vertical shift detecting unit 122 does not perform Step 306 or Step 1304 to stop the detection of the vertical shift between the object region of the criterion image and the object region of the reference image. Accordingly, it is possible to reduce the processing load.

(8) Further, in a case where any one or both of the amount of vertical movement of the criterion image and the amount of vertical movement of the reference image are already calculated by the object region vertical shift detecting unit 122 in Step 311 (Step 402: "No"), the object region solid object determining unit 123 does not perform Step 406 or Step 1402 to determine that the object is a solid object in Step 407 without calculating the parallax of the object based on the vertical shift. Accordingly, it is possible to reduce the processing load.

(9) Further, the object region vertical shift detecting unit 122 does not detect the vertical shift between the object region of the criterion image and the object region of the reference image for an object that is already determined as not a solid object in the past frame (Step 303: "Yes") by omitting Step 306 or Step 1304. Accordingly, it is possible to reduce the processing load.

(10) Further, the object region solid object determining unit 123 does not perform Step 406 or Step 1402 for an object that is already determined as not a solid object in the past frame by the object region vertical shift detecting unit 122 (Step 403: "Yes") to determine that the object is not a solid object in Step 407 without calculating the parallax of the object based on the vertical shift. Accordingly, it is possible to reduce the processing load.

(11) The calculating unit 110, which is the image processing device, further includes the geometric calibration unit 125 which calculates any one or both of the amount of vertical movement of the criterion image and the amount of vertical movement of the reference image based on the vertical shift between the object region of the criterion image and the object region of the reference image by using the criterion image and the reference image of each of a plurality of frames (Steps 502 to 520). In Step 202, the geometric correction unit 119 performs the geometric correction of the criterion image and the reference image by using any one or both of the amount of vertical movement of the criterion image and the amount of vertical movement of the reference image calculated by the geometric calibration unit 125. Accordingly, when there is a vertical shift in a stereo image, it is possible to accurately correct the shift.

The respective embodiments and various modified examples described above are merely examples, and the present invention is not limited to the contents of the embodiments and modified examples as long as the features of the invention are not impaired. Moreover, although various embodiments and modified examples have been described above, the present invention is not limited to the contents thereof.

Reference Signs List

100a, 100b imaging unit
101a, 101b optical element unit
102a, 102b imaging element unit
110 calculating unit
111 captured image storing unit
112 geometrically corrected image storing unit
113 parallax image storing unit
114 geometric correction information storing unit
115 geometric correction changed information storing unit
116 object region information storing unit
117 synchronization signal generating unit
118a criterion image input unit
118b reference image input unit
119 geometric correction unit
120 parallax calculating unit
121 solid object estimating unit
122 object region vertical shift detecting unit
123 object region solid object determining unit
124 recognition unit
125 geometric calibration unit
130 screen sound output unit
140 control unit

**Claims**

1.  An image processing device comprising:

    image input units which input a first image and a second image captured by a pair of imaging units (100a, 100b) constituting a stereo camera at each predetermined frame rate, respectively;
    a geometric correction unit (119) which performs geometric correction of the first image and the second image by using preset geometric correction information;
    a parallax calculating unit (120) which calculates a parallax image based on the first image and the second image that are geometrically corrected by the geometric correction unit (119);
    a solid object estimating unit (121) which performs solid object estimation for estimating whether or not an object included in the first image and the second image is a solid object on a basis of the parallax image calculated by the parallax calculating unit (120);
    **characterized in that** the device further comprises:

    a vertical shift detecting unit which uses the first image and the second image of the same frame as that for which the solid object estimation has been performed to detect a vertical shift between a first region including the object in the first image and a second region including the object in the second image in a case where the object is estimated as a solid object by the solid object estimating unit (121); and
    a solid object determining unit which calculates parallax of the object on a basis of the vertical shift between the first region and the second region detected by the vertical shift detecting unit, and determines whether or not the object is a solid object.

2.  The image processing device according to claim 1, wherein the vertical shift detecting unit detects a feature point in which both a vertical edge and a horizontal edge exist in the first region, detects a corresponding point corresponding to the feature point in the second region, and detects, as the vertical shift between the first region and the second region, a vertical shift between the feature point in the first region and the corresponding point in the second region.

3.  The image processing device according to claim 1, wherein the vertical shift detecting unit detects, as a diagonal edge, a linear edge extending within a predetermined angle range in the first region, and detects, in a case where a plurality of diagonal edges of which a difference in angle is smaller than a predetermined threshold value have been detected, a vertical shift between an end portion of the diagonal edge in the first region and an end portion of the diagonal edge in the second region as the vertical shift between the first region and the second region.

4.  The image processing device according to any one of claims 1 to 3, wherein the solid object determining unit corrects the vertical shift between the first region and the second region and calculates parallax between the first region and the second region after the correction to calculate the parallax of the object, and determines whether or not the object is a solid object.

5.  The image processing device according to any one of claims 1 to 3, wherein the vertical shift detecting unit calculates any one or both of an amount of vertical movement of the first image and an amount of vertical movement of the second image on a basis of the detected vertical shift between the first region and the second region, and
    the geometric correction unit (119) performs the geometric correction of the first image and the second image by using any one or both of the amount of vertical movement of the first image and the amount of vertical movement of the second image calculated by the vertical shift detecting unit.

6.  The image processing device according to claim 5, wherein when the number of times of detection of the vertical shift between the first region and the second region is equal or larger than a predetermined threshold value, the vertical shift detecting unit calculates any one or both of the amount of vertical movement of the first image and the amount of vertical movement of the second image.

7.  The image processing device according to claim 5, wherein in a case where any one or both of the amount of vertical movement of the first image and the amount of vertical movement of the second image are already calculated, the vertical shift detecting unit stops the detection of the vertical shift between the first region and the second region.

8.  The image processing device according to claim 5, wherein in a case where any one or both of the amount of vertical movement of the first image and the amount of vertical movement of the second image are already calculated by the vertical shift detecting unit, the solid object determining unit determines that the object is a solid object without calculating the parallax of the object based on the vertical shift.

9. The image processing device according to any one of claims 1 to 3, wherein the vertical shift detecting unit does not detect the vertical shift between the first region and the second region for the object that is already determined as not a solid object in a past frame.

10. The image processing device according to claim 9, wherein, for the object that is already determined as not a solid object in a past frame by the vertical shift detecting unit, the solid object determining unit determines that the object is not a solid object without calculating the parallax of the object based on the vertical shift.

11. The image processing device according to any one of claims 1 to 3, further comprising a geometric calibration unit (125) which calculates any one or both of an amount of vertical movement of the first image and an amount of vertical movement of the second image based on the vertical shift between the first region and the second region by using the first image and the second image of each of a plurality of frames,
wherein the geometric correction unit (119) performs the geometric correction of the first image and the second image by using any one or both of the amount of vertical movement of the first image and the amount of vertical movement of the second image calculated by the geometric calibration unit (125).

**Patentansprüche**

1. Bildverarbeitungsvorrichtung, die Folgendes umfasst:

   Bildeinleseeinheiten, die ein erstes Bild bzw. ein zweites Bild, die durch ein Paar Bildgebungseinheiten (100a, 100b), das eine Stereokamera bildet, mit jeder vorgegebenen Bildrate aufgenommen werden, einlesen;
   eine Geometriekorrektureinheit (119), die eine geometrische Korrektur des ersten Bilds und des zweiten Bilds unter Verwendung voreingestellter Geometriekorrekturinformationen durchführt;
   eine Parallaxenberechnungseinheit (120), die ein Parallaxenbild auf der Grundlage des ersten Bilds und des zweiten Bilds, die durch die Geometriekorrektureinheit (119) geometrisch korrigiert wurden, berechnet; und
   eine Festkörperobjektschätzeinheit (121), die eine Festkörperobjektschätzung zum Schätzen davon, ob ein Objekt, das in dem ersten Bild und dem zweiten Bild enthalten ist, ein Festkörper ist oder nicht, auf der Grundlage des Parallaxenbilds, das durch die Parallaxenberechnungseinheit (120) berechnet wurde, durchführt;
   **dadurch gekennzeichnet, dass** die Vorrichtung ferner Folgendes umfasst:

   eine Einheit zur Detektion vertikaler Verschiebungen, die das erste Bild und das zweite Bild desselben Rahmens wie der, für den die Festkörperobjektschätzung durchgeführt wurde, verwendet, um eine vertikale Verschiebung zwischen einem ersten Bereich, der das Objekt im ersten Bild enthält, und einem zweiten Bereich, der das Objekt im zweiten Bild enthält, zu detektieren, falls das Objekt durch die Festkörperobjektschätzeinheit (121) als ein Festkörper geschätzt wird; und
   eine Festkörperobjektbestimmungseinheit, die eine Parallaxe des Objekts auf der Grundlage der vertikalen Verschiebung zwischen dem ersten Bereich und dem zweiten Bereich, die durch die Einheit zur Detektion vertikaler Verschiebungen detektiert wurde, berechnet und bestimmt, ob das Objekt ein Festkörper ist oder nicht.

2. Bildverarbeitungsvorrichtung nach Anspruch 1, wobei die Einheit zur Detektion vertikaler Verschiebungen einen Merkmalspunkt detektiert, an dem sowohl eine vertikale Kante als auch eine horizontale Kante im ersten Bereich vorhanden ist, einen entsprechenden Punkt detektiert, der dem Merkmalspunkt im zweiten Bereich entspricht, und als die vertikale Verschiebung zwischen dem ersten Bereich und dem zweiten Bereich eine vertikale Verschiebung zwischen dem Merkmalspunkt im ersten Bereich und dem entsprechenden Punkt im zweiten Bereich detektiert.

3. Bildverarbeitungsvorrichtung nach Anspruch 1, wobei die Einheit zur Detektion vertikaler Verschiebungen als eine diagonale Kante eine geradlinige Kante detektiert, die in einem vorgegebenen Winkelumfang im ersten Bereich verläuft, und, falls mehrere diagonale Kanten, deren Winkeldifferenz kleiner als ein vorgegebener Schwellenwert ist, detektiert wurden, eine vertikale Verschiebung zwischen einem Endabschnitt der diagonalen Kante im ersten Bereich und einem Endabschnitt der diagonalen Kante im zweiten Bereich als die vertikale Verschiebung zwischen dem ersten Bereich und dem zweiten Bereich detektiert.

4. Bildverarbeitungsvorrichtung nach einem der Ansprüche 1 bis 3, wobei die Festkörperobjektbestimmungseinheit die vertikale Verschiebung zwischen dem ersten Bereich und dem zweiten Bereich korrigiert und eine Parallaxe zwischen dem ersten Bereich und dem zweiten Bereich nach der Korrektur berechnet, um die Parallaxe des Objekts zu berechnen, und bestimmt, ob das Objekt ein Festkörper ist oder nicht.

5. Bildverarbeitungsvorrichtung nach einem der Ansprüche 1 bis 3, wobei die Einheit zur Detektion vertikaler Verschiebungen einen Betrag einer vertikalen Bewegung des ersten Bilds und/oder einen Betrag einer vertikalen Bewegung des zweiten Bilds auf der Grundlage der detektierten vertikalen Verschiebung zwischen dem ersten Bereich und dem zweiten Bereich berechnet und

die Geometriekorrektureinheit (119) die geometrische Korrektur des ersten Bilds und des zweiten Bilds unter Verwendung des Betrags einer vertikalen Bewegung des ersten Bilds und/oder des Betrags einer vertikalen Bewegung des zweiten Bilds, die durch die Einheit zur Detektion vertikaler Verschiebungen berechnet werden, durchführt.

6. Bildverarbeitungsvorrichtung nach Anspruch 5, wobei dann, wenn die Anzahl von Detektionen der vertikalen Verschiebung zwischen dem ersten Bereich und dem zweiten Bereich gleich oder größer als ein vorgegebener Schwellenwert ist, die Einheit zur Detektion vertikaler Verschiebungen den Betrag einer vertikalen Bewegung des ersten Bilds und/oder den Betrag einer vertikalen Bewegung des zweiten Bilds berechnet.

7. Bildverarbeitungsvorrichtung nach Anspruch 5, wobei, falls der Betrag einer vertikalen Bewegung des ersten Bilds und/oder der Betrag einer vertikalen Bewegung des zweiten Bilds bereits berechnet worden sind, die Einheit zur Detektion vertikaler Verschiebungen die Detektion der vertikalen Verschiebung zwischen dem ersten Bereich und dem zweiten Bereich stoppt.

8. Bildverarbeitungsvorrichtung nach Anspruch 5, wobei, falls der Betrag einer vertikalen Bewegung des ersten Bilds und/oder der Betrag einer vertikalen Bewegung des zweiten Bilds durch die Einheit zur Detektion vertikaler Verschiebungen bereits berechnet worden sind, die Festkörperobjektbestimmungseinheit bestimmt, dass das Objekt ein Festkörper ist, ohne die Parallaxe des Objekts auf der Grundlage der vertikalen Verschiebung zu berechnen.

9. Bildverarbeitungsvorrichtung nach einem der Ansprüche 1 bis 3, wobei die Einheit zur Detektion vertikaler Verschiebungen die vertikale Verschiebung zwischen dem ersten Bereich und dem zweiten Bereich für das Objekt, das in einem vergangenen Rahmen bereits als kein Festkörper bestimmt worden ist, nicht detektiert.

10. Bildverarbeitungsvorrichtung nach Anspruch 9, wobei für das Objekt, das durch die Einheit zur Detektion vertikaler Verschiebungen in einem vergangenen Rahmen bereits als kein Festkörper bestimmt worden ist, die Festkörperobjektbestimmungseinheit bestimmt, dass das Objekt kein Festkörper ist, ohne die Parallaxe des Objekts auf der Grundlage der vertikalen Verschiebung zu berechnen.

11. Bildverarbeitungsvorrichtung nach einem der Ansprüche 1 bis 3, die ferner eine Geometriekalibriereinheit (125) umfasst, die einen Betrag einer vertikalen Bewegung des ersten Bilds und/oder einen Betrag einer vertikalen Bewegung des zweiten Bilds auf der Grundlage der vertikalen Verschiebung zwischen dem ersten Bereich und dem zweiten Bereich unter Verwendung des ersten Bilds und des zweiten Bilds jedes mehrerer Rahmen berechnet, wobei die Geometriekorrektureinheit (119) die geometrische Korrektur des ersten Bilds und des zweiten Bilds unter Verwendung des Betrags einer vertikalen Bewegung des ersten Bilds und/oder des Betrags einer vertikalen Bewegung des zweiten Bilds, die durch die Geometriekalibriereinheit (125) berechnet wurden, durchführt.

## Revendications

1. Dispositif de traitement d'image comprenant :

des unités d'entrée d'images qui entrent une première image et une seconde image capturées par une paire d'unités d'imagerie (100a, 100b) constituant une caméra stéréoscopique à chaque fréquence de trame prédéterminée, respectivement ;
une unité de correction géométrique (119) qui effectue une correction géométrique de la première image et de la seconde image en utilisant des informations de correction géométrique prédéfinies ;
une unité de calcul de parallaxe (120) qui calcule une image de parallaxe sur la base de la première image et de la seconde image qui sont géométriquement corrigées par l'unité de correction géométrique (119) ;
une unité d'estimation d'objet solide (121) qui effectue une estimation d'objet solide pour estimer si oui ou non un objet inclus dans la première image et la seconde image est un objet solide sur une base de l'image de parallaxe calculée par l'unité de calcul de parallaxe (120) ;

**caractérisé en ce que** le dispositif comprend en outre :

une unité de détection de décalage vertical qui utilise la première image et la seconde image de la même trame comme celle pour laquelle l'estimation d'objet solide a été effectuée pour détecter un décalage vertical entre une première région incluant l'objet dans la première image et une seconde région incluant l'objet dans la seconde image dans un cas où l'objet est estimé comme objet solide par l'unité d'estimation d'objet solide (121) ; et

une unité de détermination d'objet solide qui calcule une parallaxe de l'objet sur une base du décalage vertical entre la première région et la seconde région détecté par l'unité de décalage vertical, et détermine si oui ou non l'objet est un objet solide.

2. Dispositif de traitement d'image selon la revendication 1, dans lequel l'unité de détection de décalage vertical détecte un point caractéristique dans lequel à la fois un bord vertical et un bord horizontal existent dans la première région, détecte un point correspondant qui correspond au point caractéristique dans la seconde région, et détecte, à titre de décalage vertical entre la première région et la seconde région, un décalage vertical entre le point caractéristique dans la première région et le point correspondant dans la seconde région.

3. Dispositif de traitement d'image selon la revendication 1, dans lequel l'unité de détection de décalage vertical détecte, à titre de bord diagonal, un bord linéaire s'étendant à l'intérieur d'une plage angulaire prédéterminée dans la première région, et détecte, dans un cas où une pluralité de bords diagonaux dont une différence en angle est plus petite qu'une valeur seuil prédéterminée ont été détectés, un décalage vertical entre une portion d'extrémité du bord diagonal dans la première région et une portion d'extrémité du bord diagonal dans la seconde région à titre de décalage vertical entre la première région et la seconde région.

4. Dispositif de traitement d'image selon l'une quelconque des revendications 1 à 3, dans lequel l'unité de détermination d'objet solide corrige le décalage vertical entre la première région et la seconde région et calcule une parallaxe entre la première région et la seconde région après la correction pour calculer la parallaxe de l'objet, et détermine si oui ou non l'objet est un objet solide.

5. Dispositif de traitement d'image selon l'une quelconque des revendications 1 à 3, dans lequel l'unité de détection de décalage vertical calcule une amplitude quelconque ou les deux parmi une amplitude de mouvement vertical de la première image et une amplitude de mouvement vertical de la seconde image sur une base du décalage vertical détecté entre la première région et la seconde région, et

l'unité de correction géométrique (119) effectue la correction géométrique de la première image de la seconde image en utilisant une amplitude quelconque ou les deux parmi l'amplitude de mouvement vertical de la première image et l'amplitude de mouvement vertical de la seconde image calculées par l'unité de détection de décalage vertical.

6. Dispositif de traitement d'image selon la revendication 5, dans lequel, quand le nombre de fois où le décalage vertical entre la première région et la seconde région est détecté est égal ou supérieur à une valeur seuil prédéterminée, l'unité de détection de décalage vertical calcule une amplitude quelconque ou les deux parmi l'amplitude mouvement vertical de la première image et l'amplitude de mouvement vertical de la seconde image.

7. Dispositif de traitement d'image selon la revendication 5, dans lequel, dans un cas où une amplitude quelconque ou les deux parmi l'amplitude de mouvement vertical de la première image et l'amplitude de mouvement vertical de la seconde image sont déjà calculées, l'unité de détection de décalage vertical arête la détection du décalage vertical entre la première région et la seconde région.

8. Dispositif de traitement d'image selon la revendication 5, dans lequel, dans un cas où une amplitude quelconque ou les deux parmi l'amplitude de mouvement vertical de la première image et l'amplitude mouvement vertical de la seconde image sont déjà calculées par l'unité de détection de décalage vertical, l'unité de détermination d'objet solide détermine que l'objet solide est un objet solide sans calculer la parallaxe de l'objet sur la base du décalage vertical.

9. Dispositif de traitement d'image selon l'une quelconque des revendications 1 à 3, dans lequel l'unité de détection de décalage vertical ne détecte pas le décalage vertical entre la première région et la seconde région pour l'objet qui est déjà déterminé comme n'étant pas un objet solide dans une trame passée.

10. Dispositif de traitement d'image selon la revendication 9, dans lequel, pour l'objet qui est déjà déterminé comme n'étant pas un objet solide dans une trame passée par l'unité de détection de décalage vertical, l'unité de détermination d'objet solide détermine que l'objet n'est pas un objet solide sans calculer la parallaxe de l'objet sur la base du décalage vertical.

11. Dispositif de traitement d'image selon l'une quelconque des revendications 1 à 3, comprenant en outre une unité de calibrage géométrique (125) qui calcule une amplitude quelconque ou les deux parmi une amplitude de mouvement vertical de la première image et une amplitude de mouvement vertical de la seconde image sur la base du décalage vertical entre la première région et la seconde région en utilisant la première et la seconde image de chacune d'une pluralité de trames,
dans lequel l'unité de correction géométrique (119) effectue la correction géométrique de la première image et de la seconde image en utilisant une amplitude quelconque ou les deux parmi l'amplitude de mouvement vertical de la première image et l'amplitude de mouvement vertical de la seconde image calculées par l'unité de calibrage géométrique (125).

# FIG. 1

# FIG. 2

STEP201

INPUT CRITERION IMAGE AND REFERENCE IMAGE

STEP202

PERFORM GEOMETRICAL CORRECTION ON IMAGES

STEP203

CALCULATE PARALLAX

STEP204

ESTIMATE SOLID OBJECT

STEP205

DETECT VERTICAL SHIFT BETWEEN OBJECT REGIONS OF CRITERION IMAGE AND REFERENCE IMAGE

STEP206

DETERMINE SOLID OBJECT IN OBJECT REGION

STEP207

RECOGNIZE TARGET OBJECT

STEP208

PERFORM GEOMETRIC CALIBRATION

STEP209

OUTPUT SCREEN AND SOUND

STEP210

GENERATE AND OUTPUT CONTROL SIGNAL

# FIG. 3

STEP 2 0 4

STEP 3 0 1

NO — HAS NOT AMOUNT OF VERTICAL MOVEMENT OF REFERENCE IMAGE CALCULATED YET AND IS THERE OBJECT ESTIMATED AS SOLID OBJECT?

YES    STEP 3 0 2

SEARCH FOR OBJECT ESTIMATED AS SOLID OBJECT IN CRITERION IMAGE OF PREVIOUS FRAME

STEP 3 0 3

YES — HAS IT BEEN DETERMINED THAT OBJECT ESTIMATED AS SOLID OBJECT IS NOT SOLID OBJECT IN PREVIOUS FRAME?

NO    STEP 3 0 4

DETECT FEATURE POINT ON OBJECT REGION OF CRITERION IMAGE

STEP 3 0 5

DETECT CORRESPONDING POINT ON OBJECT REGION OF REFERENCE IMAGE THAT CORRESPONDS TO FEATURE POINT

STEP 3 0 6

CALCULATE VERTICAL SHIFT BETWEEN OBJECT REGIONS OF CRITERION IMAGE AND REFERENCE IMAGE

STEP 3 0 7

HAVE ALL REGIONS OF OBJECTS ESTIMATED AS SOLID OBJECTS BEEN PROCESSED? — NO

YES

STEP 3 0 8

NO — ARE THERE ONE OR MORE VERTICAL SHIFTS BETWEEN OBJECT REGIONS CALCULATED IN CURRENT FRAME?

YES    STEP 3 0 9

CALCULATE AVERAGE VALUE OF VERTICAL SHIFTS BETWEEN OBJECT REGIONS CALCULATED IN CURRENT FRAME

STEP 3 1 0

NO — IS NUMBER OF FRAMES FOR WHICH VERTICAL SHIFT BETWEEN OBJECT REGIONS IS CALCULATED UP TO CURRENT FRAME EQUAL TO OR LARGER THAN THRESHOLD VALUE?

YES    STEP 3 1 1

CALCULATE AMOUNT OF VERTICAL MOVEMENT OF REFERENCE IMAGE

STEP 2 0 6

# FIG. 4

STEP 2 0 5

STEP 4 0 1

NO ← IS THERE OBJECT ESTIMATED AS SOLID OBJECT?

↓ YES    STEP 4 0 2

NO ← HAS NOT AMOUNT OF VERTICAL MOVEMENT OF REFERENCE IMAGE CALCULATED YET?

↓ YES    STEP 4 0 3

YES ← HAS IT BEEN DETERMINED THAT OBJECT ESTIMATED AS SOLID OBJECT IS NOT SOLID OBJECT IN PREVIOUS FRAME?

↓ NO

STEP 4 0 4

NO ← IS VERTICAL SHIFT BETWEEN OBJECT REGIONS OF CRITERION IMAGE AND REFERENCE IMAGE EQUAL TO OR LARGER THAN THRESHOLD VALUE?

↓ YES    STEP 4 0 5

PERFORM GEOMETRICAL CORRECTION ON OBJECT REGION OF REFERENCE IMAGE

STEP 4 0 6

CALCULATE PARALLAX BETWEEN OBJECT REGIONS

STEP 4 0 7

DETERMINE SOLID OBJECT OF OBJECT REGION

STEP 4 0 8

HAVE ALL OBJECT REGIONS FOR WHICH VERTICAL SHIFT IS CALCULATED IN CURRENT FRAME BEEN PROCESSED? → NO

↓ YES

STEP 2 0 7

# FIG. 5

STEP207

STEP501

CALCULATE AMOUNTS OF HORIZONTAL MOVEMENT OF CRITERION IMAGE AND REFERENCE IMAGE AND AMOUNT OF VERTICAL MOVEMENT OF REFERENCE IMAGE

STEP502

NO — ARE IMAGES OF FIRST FRAME OR HAS STEP 520 BEEN PERFORMED IN PREVIOUS FRAME?

YES  STEP503

DETECT VERTICAL EDGE AND HORIZONTAL EDGE OF CRITERION IMAGE

STEP504

NO — HAS STEP 503 BEEN PERFORMED IN PREVIOUS FRAME?

YES  STEP505

DETECT FEATURE POINT IN FIRST REGION OF CRITERION IMAGE

STEP506

NO — HAS STEP 505 BEEN PERFORMED IN PREVIOUS FRAME?

YES  STEP507

DETECT FEATURE POINT IN SECOND REGION OF CRITERION IMAGE

STEP508

NO — HAS STEP 507 BEEN PERFORMED IN PREVIOUS FRAME?

YES  STEP509

DETECT FEATURE POINT IN THIRD REGION OF CRITERION IMAGE

STEP510

NO — HAS STEP 509 BEEN PERFORMED IN PREVIOUS FRAME?

YES  STEP511

DETECT FEATURE POINT IN FOURTH REGION OF CRITERION IMAGE

STEP512

STEP209

34

# FIG. 6

STEP510

STEP503, STEP505
STEP507, AND STEP509

STEP512

NO — HAS STEP 511 BEEN PERFORMED IN PREVIOUS FRAME?

YES — STEP513

DETECT CORRESPONDING POINT OF REFERENCE IMAGE THAT CORRESPONDS TO FEATURE POINT IN FIRST REGION OF CRITERION IMAGE AND CALCULATE VERTICAL SHIFT

STEP514

NO — HAS STEP 513 BEEN PERFORMED IN PREVIOUS FRAME?

YES — STEP515

DETECT CORRESPONDING POINT OF REFERENCE IMAGE THAT CORRESPONDS TO FEATURE POINT IN SECOND REGION OF CRITERION IMAGE AND CALCULATE VERTICAL SHIFT

STEP516

NO — HAS STEP 515 BEEN PERFORMED IN PREVIOUS FRAME?

YES — STEP517

DETECT CORRESPONDING POINT OF REFERENCE IMAGE THAT CORRESPONDS TO FEATURE POINT IN THIRD REGION OF CRITERION IMAGE AND CALCULATE VERTICAL SHIFT

STEP518

NO — HAS STEP 517 BEEN PERFORMED IN PREVIOUS FRAME?

YES — STEP519

DETECT CORRESPONDING POINT OF REFERENCE IMAGE THAT CORRESPONDS TO FEATURE POINT IN FOURTH REGION OF CRITERION IMAGE AND CALCULATE VERTICAL SHIFT

STEP520

CALCULATE AMOUNT OF VERTICAL MOVEMENT OF REFERENCE IMAGE

STEP209

# FIG. 7

# FIG. 8

# FIG. 9

# FIG. 10

## FIG. 11

## FIG. 12

# FIG. 13

STEP 2 0 4

STEP 3 0 1

NO — HAS NOT AMOUNT OF VERTICAL MOVEMENT OF REFERENCE IMAGE CALCULATED YET AND IS THERE OBJECT ESTIMATED AS SOLID OBJECT?

YES — STEP 3 0 2

SEARCH FOR OBJECT ESTIMATED AS SOLID OBJECT IN CRITERION IMAGE OF PREVIOUS FRAME

STEP 3 0 3

YES — HAS IT BEEN DETERMINED THAT OBJECT ESTIMATED AS SOLID OBJECT IS NOT SOLID OBJECT IN PREVIOUS FRAME?

NO — STEP 1 3 0 1

DETECT VERTICAL AND HORIZONTAL EDGES IN OBJECT REGION OF CRITERION IMAGE

STEP 1 3 0 2

DETECT OBLIQUE EDGE IN OBJECT REGION OF CRITERION IMAGE

STEP 1 3 0 3

NO — IN OBJECT REGION OF CRITERION IMAGE, ARE THERE TWO OR MORE OBLIQUE EDGES OF WHICH ANGLES ARE WITHIN PREDETERMINED RANGE AND DIFFERENCE BETWEEN ANGLES IS SMALLER THAN THRESHOLD VALUE?

YES — STEP 1 3 0 4

DETECT VERTICAL SHIFT AT END PORTIONS OF OBLIQUE EDGES IN OBJECT REGION OF CRITERION IMAGE

STEP 3 0 7

HAVE ALL REGIONS OF OBJECTS ESTIMATED AS SOLID OBJECTS BEEN PROCESSED? — NO

YES — STEP 3 0 8

NO — ARE THERE ONE OR MORE VERTICAL SHIFTS BETWEEN OBJECT REGIONS CALCULATED IN CURRENT FRAME?

YES — STEP 3 0 9

CALCULATE AVERAGE VALUE OF VERTICAL SHIFTS BETWEEN OBJECT REGIONS CALCULATED IN CURRENT FRAME

STEP 3 1 0

NO — IS NUMBER OF FRAMES FOR WHICH VERTICAL SHIFT BETWEEN OBJECT REGIONS IS CALCULATED UP TO CURRENT FRAME EQUAL TO OR LARGER THAN THRESHOLD VALUE?

YES — STEP 3 1 1

CALCULATE AMOUNT OF VERTICAL MOVEMENT OF REFERENCE IMAGE

STEP 2 0 6

# FIG. 14

STEP 2 0 5

STEP 4 0 1

IS THERE OBJECT ESTIMATED AS SOLID OBJECT? — NO

YES — STEP 4 0 2

HAS NOT AMOUNT OF VERTICAL MOVEMENT OF REFERENCE IMAGE CALCULATED YET? — NO

YES — STEP 4 0 3

HAS IT BEEN DETERMINED THAT OBJECT ESTIMATED AS SOLID OBJECT IS NOT SOLID OBJECT IN PREVIOUS FRAME? — YES

NO — STEP 1 4 0 1

IS VERTICAL SHIFT AT END PORTIONS OF OBLIQUE EDGES EQUAL TO OR LARGER THAN THRESHOLD VALUE? — NO

YES — STEP 1 4 0 2

CALCULATE PARALLAX BETWEEN OBJECT REGIONS BETWEEN WHICH VERTICAL SHIFT IS CORRECTED

STEP 4 0 7

DETERMINE SOLID OBJECT OF OBJECT REGION

STEP 4 0 8

HAVE ALL OBJECT REGIONS FOR WHICH VERTICAL SHIFT IS CALCULATED IN CURRENT FRAME BEEN PROCESSED? — NO

YES

STEP 2 0 7

40

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3410705 A
- US 2017201736 A
- JP 2018105682 A
- JP 2004354257 A